(19) Europäisches Patentamt

European Patent Office

Office européen des brevets

(11) **EP 1 402 657 B1**

(12) **EUROPÄISCHE PATENTSCHRIFT**

(45) Veröffentlichungstag und Bekanntmachung des Hinweises auf die Patenterteilung:
**01.06.2005 Patentblatt 2005/22**

(51) Int Cl.$^7$: **H04B 7/08**, H05B 7/06

(21) Anmeldenummer: 02758084.4

(86) Internationale Anmeldenummer:
**PCT/DE2002/002494**

(22) Anmeldetag: **03.07.2002**

(87) Internationale Veröffentlichungsnummer:
**WO 2003/005606 (16.01.2003 Gazette 2003/03)**

(54) **ADAPTIVES SIGNALVERARBEITUNGSVERFAHREN IN EINEM MIMO-SYSTEM**

ADAPTIVE SIGNAL PROCESSING METHOD IN A MIMO SYSTEM

PROCEDE DE TRAITEMENT DE SIGNAUX ADAPTATIF DANS UN SYSTEME A ENTREES MULTIPLES ET SORTIES MULTIPLES

(84) Benannte Vertragsstaaten:
**AT BE BG CH CY CZ DE DK EE ES FI FR GB GR IE IT LI LU MC NL PT SE SK TR**

(30) Priorität: **03.07.2001 DE 10132492**

(43) Veröffentlichungstag der Anmeldung:
**31.03.2004 Patentblatt 2004/14**

(73) Patentinhaber: **Siemens Aktiengesellschaft 80333 München (DE)**

(72) Erfinder:
- **JUNGNICKEL, Volker**
  **10435 Berlin (DE)**
- **HAUSTEIN, Thomas**
  **13187 Berlin (DE)**
- **JORSWIECK, Eduard**
  **10825 Berlin (DE)**
- **v. HELMOT, Clemens**
  **12205 Berlin (DE)**
- **WUNDER, Gerhard**
  **10247 Berlin (DE)**
- **KRÜGER, Udo**
  **12161 Berlin (DE)**
- **POHL, Volker**
  **10407 Berlin (DE)**

(56) Entgegenhaltungen:
WO-A-98/09381          US-A- 6 141 393

- **KAI-KIT WONG ET AL: "MIMO antenna system for frequency selective fading channels" IEEE PIMRC 2000, Bd. Vol, Nr. 2, Seiten 1500-1504, XP010520881 in der Anmeldung erwähnt**

**Beschreibung**

Die Erfindung bezieht sich auf ein adaptives Signalverarbeitungsverfahren für eine bidirektionale Funkübertragung von digitalen Datenströmen in Auf- und Abwärtssenderichtung über einen MIMO-Kanal mit n Antennen auf der einen und m Antennen auf der anderen Kanalseite und mit einer sendeseitigen Signalvorverarbeitung der Sendesignale x und einer empfangsseitigen Signalnachbearbeitung der Empfangssignale y, die beide auf einer Schätzung der komplexwertigen Kanalmatrix basieren, und auf ein MIMO-System mit zumindest einer Aufwärtssendestation mit n Antennen, einer Abwärtssendestation mit m Antennen sowie einer Signalverarbeitungseinheit zumindest in der mit m Antennen ausgerüsteten Station zur Durchführung des adaptiven Signaiverarbeitungsverfahrens.

Von modernen Mobilkommunikationssystemen wird erwartet, dass sie in schmalen Frequenzbändern Daten mit hoher Bitrate bei niedriger Sendeleistung möglichst fehlerfrei übertragen. Diesem Ideal steht die zufällige Natur des Funkkanals entgegen, dessen Amplituden- und Phasengang sich zeitlich, örtlich und abhängig von der Trägerfrequenz außerordentlich stark verändern (fading). Funkkanäle können statistisch durch eine Rayleigh- (ohne Sichtverbindung) bzw. Rice-Verteilung (mit Sichtverbindung) modelliert werden. Die Erfindung bezieht sich auf ein adaptives Übertragungsverfahren auf der Basis von Multielement-Antennen an einer Mobllstation auf der einen und einer Basisstation auf der anderen Kanalseite, zwischen denen ein bidirektionaler Funkbetrieb stattfindet, sodass beide Seiten als Sender und Empfänger auftreten können. Solche "multiple-input-multiple-output" (MIMO) -Systeme werden weltweit zunehmend untersucht, well damit die pro 1 Hz Bandbreite. übertragbare Datenmenge ("spektrale Effizienz") wesentlich erhöht werden kann. Dies wird durch das gleichzeitige Senden mehrerer Datenströme im gleichen Frequenzband (Gleichkanalbetrieb) erreicht.

MIMO-Systeme spielen in der Funkübertragung eine wichtige Rolle, seit Foschini gezeigt hat, dass man damit die spektrale Effizienz, d.h. die Ausnutzung der knappen Ressource "Bandbreite", erheblich verbessern kann [1]. Bei einem MIMO-System werden in der Senderichtung mehrere digitale Datenströme gleichzeitig über mehrere Sendeantennen auf derselben Frequenz abgestrahlt (Sendevektor x). Die mehreren Empfangsantennen (Empfangsvektor y) testen die resultierende Feldverteilung an verschiedenen Orten, d.h. man findet jeweils eine andere Überlagerung der Sendesignale vor. Dies kann durch eine vektorielle Gleichung beschrieben werden

$$y = H \cdot x + n \tag{1}$$

Hierin wird mit H die sogenannte "Kanalmatrix" bezeichnet, in der die Amplituden- und Phasenwerte der Einzelkanäle zwischen jedem möglichen Paar von Sende- und Empfangsantennen ("Datensignalpfade") aufgeführt sind. Der Vektor n beschreibt das Rauschen an den einzelnen Empfangsantennen. Die gesendeten Datensignale können empfangsseitig durch eine geeignete Signalverarbeitung wieder voneinander getrennt werden. Für die empfangsseitige Trennung der Datensignale ist die Kenntnis der Kanalmatrix H erforderlich, zu der man in der Praxis durch eine vorab durchgeführte und in regelmäßigen Abständen wiederholte Schätzung der Kanalmatrix H auf der Basis von Referenzsignalen gelangen kann [1].

Bei sehr einfachen MIMO-Systemen aus dem Stand der Technik wird aus der Kenntnis der Kanalmatrix H mit der Dimension nxm und den einzelnen Einträgen $h_{ij}$ in der Kanalmatrix (wobei jeder Eintrag eine komplexe Zahl ist, die die Übertragung im Funkkanal von der j-ten Sendeantenne zur i-ten Empfangsantenne beschreibt) zunächst eine spezielle Pseudoinverse $H^{-1}$ von H berechnet (beispielsweise die Moore-Penrose-Pseudoinverse) und anschlieBend zur Rekonstruktion der gesendeten Datensignale (rekonstruierte Datensignale gekennzeichnet durch ein Apostroph) der Empfangsvektor damit multipliziert (sogenanntes "zero-forcing"). Es gilt:

$$x' = H^{-1} \cdot y = x + H^{-1} \cdot n \tag{2}$$

Problematisch bei dieser rein empfängerseitigen Signalverarbeitung ist der Term $(H^{-1} \cdot n)$. Er bewirkt, dass bei der Dekorrelation der Sendesignale gemäß Gleichung (2) auch das Rauschen in den einzelnen Datensignalpfaden. in Abhängigkeit vom Kanal verstärkt wird. Im Ergebnis wird dadurch eine relativ hohe Sendeleistung benötigt, um alle Datensignale fehlerfrei zu dekodieren.

Eine deutliche Verbesserung brachte die Arbeit von Golden, Foschini et al. 1999, in der eine rekursive empfängerseitige Signalverarbeitung (Bell Labs Layered Space-Time, "BLAST" bzw. "V-BLAST" [2]) vorgeschlagen wurde. Dabei wird zunächst das am stärksten einfallende Datensignal selektiert und dekodiert. Vor der Detektion des nächst stärkeren Signals wird das bereits dekodierte Signal von den Empfangssignalen aller Antennen abgezogen. Hierdurch reduziert sich die effektive Anzahl der Sender im System, das heißt, man muss zunehmend weniger Sender mit der gleichen Anzahl von Empfangsantennen detektieren, wodurch sich die Wahrscheinlichkeit von Fehlem bei der Detektion der verbleibenden Datenströme reduziert Man eliminiert dazu die entsprechende Spalte in der Kanalmatrix und berechnet eine modifizierte Pseudoinverse $H_1^{-1}$. Durch den Schritt für Schritt zunehmenden Überschuss an Empfangsantennen verringert sich die Norm der Zeilenvektoren in den Matrizen $H_1^{-1}$ (i = 1...n). Dadurch wird die Rauschvarianz kleiner, und die Fehlerrate bei der Detektion der verbleibenden Datensignale ist niedriger, Insgesamt verbessert sich die Bitfehlerrate durch das BLAST-Verfahren erheblich. Es existieren mehrere Variationen des rekursiven Signalverarbeitungsverfahrens (z.B. Turbo-BLAST **[3]** oder BLAST in Kombination mit MMSE-Detektion **[4]**). Schwachpunkte sind die zeitaufwändige rekursive Signalverarbeitung, die eine Echtzeitübertragung bei hohen Datenraten erschwert sowie die innerhalb der Rekursion durchgeführten, nichtlinearen Entscheidungen, die im Fehlerfall weitere Fehlentscheidungen bei den später detektierten Datenströmen nach sich ziehen können. Diese Fehlerfortpflanzung tritt bei vielen nichtlinearen Detektionsalgorithmen auf, z.B. auch beim sogenannten "decision feedback equalizer" (DFE). Das BLAST-Verfahren kann also den Einfluss des Terms ($H^{-1} \cdot n$) gemäß Gleichung (2 ) auf die Bitfehlerrate zwar verringem, aber nicht beseitigen.

Im Prinzip ist es bekannt, dass man die Systemleistung durch eine senderseitige Signalverarbeitung verbessern kann. Beispielsweise gibt eine Arbeit von Telatar, 1999 **[5],** eine Bedingung an, wie man durch die Kenntnis des Kanals bereits senderseitig die Kapazität maximieren kann. Das Verfahren wird als "Waterfilling"-Verfahren bezeichnet Für die Optimierung der informationstheoretischen Kapazität wird jedoch in dieser Arbeit kein direkter Bezug auf das anzuwendende Modulationsverfahren und die Anzahl der tatsächlich benutzten Einzelkanäle genommen. Schlechte Einzelkanäle werden beim Waterflling-Verfahren abgeschattet, weil es vorteilhaft ist, deren Datensignale über die verbleibenden Kanäle mit höherer Datenrate zu übertragen. Dabei wird die Sendeleistung auf die verbleibenden Kanäle so aufgeteilt, dass in allen Kanälen die Summe aus Sende- und Rauschleistung gleich einer Konstanten ist, die man anschaulich als "Füllstand" ("Waterfilling") interpretieren kann. Untersuchungen zeigten jedoch, dass das Waterfilling-Verfahren nur bei einem niedrigen Signal-zu-Stör-Leistungsverhältnis einen spürbaren Zugewinn an Kapazität erbringt. Es erfordert aber eine vergleichsweise hohe Flexibilität und Komplexität im Übertragungssystem, weil das Signal-zu-Rausch-Verhältnis in den einzelnen Kanälen unterschiedlich ist. Folglich braucht man in jedem Einzelkanal ein entsprechend angepasstes Modulations- und Kodierverfahren. In der theoretischen Arbeit von Telatar wird dieser Ansatz. zur Kapazitätsverbesserung eines MIMO-Systems vorgeschlagen. Zur Bewertung von Kommunikationssystemen benutzt die Informationstheorie die Kapazität als Maß für die höchstmögliche, in einer Bandbreite von 1Hz mit niedriger Fehlerrate übertragbare Datenmenge. Bei Kapazitätsbetrachtungen wird jedoch kein Bezug auf technische Randbedingungen, wie z.B. Datenrate, Modulationsverfahren und Kanalkodierung genommen. Aus der Shannonschen Ableitung wird ersichtlich, dass die ultimative Kapazität aber erst bei einer gegen Unendlich strebenden Redundanz im System zu erreichen ist, was mit einem unendlich hohen technischen Aufwand gleichbedeutend ist. Dadurch wird aber die Effizienz bei der praktischen Umsetzung dieses bekannten Verfahrens sehr klein. In der Praxis benutzt man deshalb für die Systembewertung zumeist die Bitfehlerrate, wobei die oben genannten technischen Parameter festgehalten werden. Es werden dann Übertragungsverfahren ausgewählt, die bezüglich der Kapazität zwar immer suboptimal, bezüglich der Effizienz bei der praktischen Umsetzung aber optimal sind. Solche Verfahren haben meist eine sehr einfache Struktur oder sie nutzen bestimmte Gegebenheiten im Funkkanal geschickt aus, um den technischen Aufwand deutlich zu senken.

Die oben beschriebenen Verfahren "zero forcing", "V-BLAST" und "Waterfilling" sind für sogenannte "flache MIMO-Kanäle" gedacht. Ein Kanal kann als "flach" angesehen werden, wenn sich der komplexwertige Kanalkoeffizient als Funktion der Frequenz im Übertragungsband nur wenig ändert. Dies ist nur für schrnalbandige Übertragungssysteme der Fall, wo die Laufzeitstreuung der Funksignale zwischen Sender und Empfänger kleiner als die Symboldauer ist. Anderenfalls ist der Kanal frequenzselektiv, und man benötigt zusätzlich eine zeitliche Entzerrung der Signale. In der Arbeit von Wong et al., 2000 **[6]** wird die gemeinsame räumlich-zeitliche Entzerrung für eine MIMO-System in frequenzselektiven Kanälen untersucht. Dabei werden die zu sendenden Daten mit einer Sendematrix T und die zu empfangenen Daten mit einer Empfangsmatrix R multipliziert. Es wird ein gängiges Signalmodell verwendet, bei dem die eigentlich notwendige Faltung des Sendesignals mit der Matrix-Kanalimpulsantwort als Multiplikation mit einer Töplitz-Matrix umformuliert wird. In der Arbeit wird diejenige Struktur der Matrizen R und T abgeleitet, die das Signal-zu-Interferenz-und-Rausch-Verhältnis am Detektor minimiert (Minimum-Mean-Square-Error-Lösung, MMSE). Im Anschluss wird die komplexe Lösung für den frequenzselektiven Kanal auf den Fall des flachen Kanals reduziert Allerdings wird nicht klar, wie der Sender in einem realen Systemansatz Kenntnisse über die Kanalkoeffizienten erlangen soll. In frequenzselektiven Kanälen erhöht sich die Anzahl der zu schätzenden Kanalparameter um den Faktor der Gedächtnislänge des Kanals. Wird zum Beispiel ein MIMO-System mit 8 Sendem und 12 Empfängem bei einer Gedächtnislänge des Kanals von 10 Symbolen betrachtet, dann müssen dem Sender 8x12x10=960 komplexe Kanalparameter bekannt sein, um die von Wong et al. beschriebenen Operationen am Sender durchführen zu können. Da sich der Kanal zeitlich ändem kann, müssen diese Parameter innerhalb der sehr kurzen Kohärenzzeit des Kanals (z.B. in 5 ms) vom Empfänger zum Sender zurückübertragen werden. Bei einer Auflösung von 8 bit für Real- und Imaginärteil jedes Kanalkoeffizienten benötigt man im Rückkanal eine Bandbreite von 2*960*8bit/5ms = 3 Mbit/s nur für die Rückübertragung der Kanalinformation, was nicht praktikabel erscheint Desweiteren bleibt offen, ob das von Wong et al. beschriebene Verfahren für beliebige Antennenkonfigurationen geeignet ist, und welche Anforderungen bezüglich der Genauigkeit der Kanalschätzung bestehen.

Ausgehend von dem durch Foschini [1,2] bekannten Stand der Technik liegt der Schwerpunkt für die vorliegende Erfindung insbesondere gegenüber Telatar [5] in der Erzielung einer möglichst hohen Umsetzungseffizienz in der Praxis, d.h. in einem möglichst niedrigen technischem Aufwand. Aufgabenkomplex für die vorliegende Erfindung ist es daher, das bekannte adaptive Signalverarbeitungsverfahren der eingangs genannten Art in einem MIMO-Kanal so weiterzuentwickeln, dass eine Optimierung der Bitfehlerrate im Sinne einer signifikanten Reduzierung erzielt wird. Dabei soll das erfindungsgemäße Verfahren eine prinzipielle Systemlösung aufzeigen. Gleichzeitig sollen mit dem erfindungsgemäßeh Verfahren möglichst geringe Sendeleistungen und Übertragungen in Echtzeit erreicht werden. Bei der Umsetzung in ein konkretes MIMO-System sollen aufgrund der durch das verbesserte Verfahren erzielten Effizienz einfache und damit leicht handhabbare und kostengünstige Realisierungsmöglichkeiten entstehen.

Die Lösung für diesen Aufgabenkomplex ist bei der vorliegenden Erfindung grundsätzlich durch die kennzeichnenden Merkmale des Hauptanspruchs für ein adaptives Signalverarbeitungsverfahren in einem MIMO-Kanal der gattungsgemäßen Art und durch die kennzeichnenden Merkmale des nebengeordneten Anspruchs für ein MIMO-System der gattungsgemäßen Art zur vorteilhaften Durchführung des erfindungsgemäßen Verfahrens charakterisiert. Bevorzugte Ausführungsformen der Erfindung sind den jeweils untergeordneten Ansprüchen zu entnehmen.

Das erfindungsgemäße adaptive Signalverarbeitungsverfahren ist vollständig. redundanz- und rückkopplungsfrei. Es arbeitet nicht nach dem Prinzip der rekursiven Fehlerkompensation, sondern vermeidet das Auftreten von Fehlem im Voraus. Das Verfahren ist gekennzeichnet durch eine durchgängig lineare Signalverarbeitung insbesondere in der Aufwärtssenderichtung mit einem sehr geringen Signalverarbeitungsaufwand. In Abwesenheit von Gleichkanalstörungen wird durch eine Signalvorverarbeitung am Sender das Signal-zu-Rausch-Leistungsverhältnis in allen Einzelkanälen des MIMO-Übertragungskanals gleich groß gemacht. Dadurch erreicht man über eine vorab festgelegte Anzahl von Einzelkanälen eine Übertragung mit gleicher Qualität für alle Kanäle. Man kann deshalb die gleiche Symbolrate in allen Einzelkanälen benutzen und dasselbe Modulationsverfahren einsetzen. Das Vorsehen einer senderseitigen Signalverarbeitung stellt gegenüber bekannten Systemen keinen wesentlichen Mehraufwand bei der technischen Umsetzung dar. Es wird gleichzeitig deutlich an empfängerseitigem Aufwand eingespart, da keine aufwändigen Rekursionsrechnungen in Verbindung mit Rückkopplungsleitungen vorhanden sind, so dass insgesamt gesehen der Hard- und Softwareaufwand niedriger als bei dem bekannten BLAST-Verfahren ist, was bei dem Verfahren gemäß [5] mit einem gegen Unendlich gehenden Aufwand ohnehin der Fall ist. Die bewusst linear angelegte Struktur der Kanalinversion bei dem erfindungsgemäßen Signalverarbeitungsverfahren erlaubt eine Übertragung mit konstant hohen Datensignalraten im Echtzeitbetrieb. Darüber hinaus verbessert sich unter den im Hauptanspruch aufgeführten Voraussetzungen auch die Qualität der MIMO-Übertragung am Empfänger. Allerdings wird man hierfür ggf. eine etwas höhere Sendeleistung in Kauf nehmen müssen. Die Bitfehlerrate wird für eine durch die praktische Umsetzbarkeit motivierte Auswahl von Randbedingungen (feste Anzahl der Einzelkanäle, gleiche Symbolrate für alle Einzelkanäle, frei wählbares Modulationsverfahren) minimiert und die praktische Umsetzung vereinfacht sich.

Mit der vorliegenden Erfindung erhält man für ein innovatives, drahtioses Kommunikationssystem gute Übertragungseigenschaften und liegt bezüglich der Effizienz bei der praktischen Umsetzung im Bereich des Optimums, da der Aufwand vergleichsweise gering ist. Unter den genannten Voraussetzungen können die zu sendenden Datensignale optimal in den Funkübertragungskanal eingekoppeit werden. Die Rauscheigenschaften am Empfänger bleiben von der Signalrekonstruktion weitgehend unberührt und man erreicht schon bei kleiner Sendeleistung vergleichsweise niedrige Bitfehlerraten, was sonst nur in der kabelgebundenen Übertragung oder in gerichteten Funkverbindungen mit Sichtverbindung möglich ist. Das MIMO- System zur Durchführung des Signalverarbeitungsverfahrens nach der Erfindung kommt dagegen ohne Sichtverbindung aus. Die vorgeschlagene sender- und emprängerseitige Signalverarbeitung hat eine linear-algebraische Struktur, die eine einfache, echtzeitfähige Implementierung auch bei hohen Datenraten ermöglicht. Bei dem Signalverarbeitungsverfahren nach der Erfindung wird die Bidehlerrate bei variabler, aber für alle Einzelkanäle gleicher Modulation und fest vorgegebener Gesamtsendeleistung optimiert. Auch die Anzahl der Einzelkanäle wird festgehalten. Analog zur Bezeichnungsweise bei Einkanal-Systemen kann bei dem erHndungsgemaßen Signalverarbeitungsverfahren im Folgenden von einer "Kanalinversion" in Auf- und Abwärtssenderichtung gesprochen werden.

Unter den im Hauptanspruch genannten Voraussetzungen erhält man eine klare und - im Unterschied zu dem aus [5] bekannten Verfahren - auch einfach in die Praxis umzusetzende Handlungsanweisung, wie die zu sendenden Datensignale auf die einzelnen Antennen verteilt werden müssen und weiche Linearkombination der Empfangssignale in der Aufwärtssenderichtung zusätzlich nötig ist, um eine zuverlässige Übertragung mit niedriger Bitfehlerrate zu gewährleisten. Das adaptive Signalverarbeitungsverfahren nach der Erfindung basiert auf einer linearen Zerlegung der Kanalmatrix. Zur linearen Zerlegung von Matrizen sind verschiedene Methoden aus der Mathematik allgemein bekannt und gut eingeführt. Eine besonders bevorzugte lineare Zerlegung, die im Folgenden beispielhaft näher erläutert werden soll, basiert auf der sogenannten "Singulärwertzeriegung" der Kanalmatrix zu

$$H = U \cdot D \cdot V^H \qquad (3)$$

wobei U eine (m x n)- und V eine (n x n)-Matrix mit orthonormalen Spaltenvektoren ist D ist eine (n x n)-Diagonalmatrix, wobei in der Diagonale die Singulärwerte der Kanalmatrix H stehen. Die Singulärwerte sind die Wurzeln aus den Eigenwerten der Kanalmatrix H. Die Anzahl der Eigenwerte entspricht der Anzahl der parallelen (virtuellen) Einzelkanäle im MIMO-Kanal. Die Größe der Eigenwerte ist ein Maß für die Leistungsübertragung in einem Einzelkanal. Dadurch, dass bei dem erfindungsgemäßen Signalverarbeitungsverfahren die Anzahl der Antennen auf den beiden Kanalseiten unterschiedlich gewählt ist (n<m), entspricht die maximale Anzahl der parallelen Einzelkanäle dem Rang der Kanalmatrix, der durch die kleinere Anzahl gegeben ist. Bei den im Funk üblichen Rayleigh- und Rice-Kanalmatrizen H sind die Singulärwerte kontinuierlich über ein breites Band verteilt, das heißt, es gibt innerhalb bestimmter Grenzen kleine und große Singulärwerte.

Setzt man die lineare Zerlegung gemäß Gleichung (3) nun in die allgemeine Übertragungsgleichung (1) ein und vernachlässigt zunächst das Rauschen, so erhält man

$$y = U \cdot D \cdot V^H \cdot x \qquad (1a)$$

Die hierdurch vorgeschriebenen mathematischen Operationen am Signalvektor x werden von rechts nach links ausgeführt und sollen im Folgenden zur näheren Veranschaulichung näher erläutert werden. Als erstes wird der Signalvektor x mit der Matrix $V^H$ multipliziert. Dies entspricht einer Drehung oder anschaulich einer Projektion auf die Richtungen der parallelen (virtuellen) Einzelkanäle. Dadurch wird jedes, von einer Antenne gesendetes Datensignal auf alle parallelen Einzelkanäle verteilt. Durch die nachfolgende Multiplikation mit der Diagonalmatrix D wird das auf jeden Einzelkanal projizierte Signalgemisch jetzt um den Wert des dazugehörigen Singulärwertes gestreckt. Die Multiplikation mit der Matrix U, die selbst aufgrund der Ungleichheit der Antennenanzahl zwischen beiden Kanalseiten (n<m) nicht quadratisch ist, bewirkt eine Abbildung in den Raum der Empfangsantennen. Die zuvor gestreckten Signale der n senkrechten Einzelkanäle werden dadurch auf m orthogonale Vektoren im Raum der Empfangsantennen projiziert. Somit kommen die n Datenströme, die in n parallele Einzelkanäle eingekoppelt wurden, welche unterschiedlich gute Übertragungseigenschaften hatten, vermischt auf m Empfangsantennen an.

Die in Gleichung (2) benutzte spezielle Pseudoinverse $H^{-1}$, bei der es sich bevorzugt um die Moore-Penrose-Pseudoinverse handeln kann, kann mittels Singulärwertzerlegung berechnet werden zu

$$H^{-1} = V \cdot D^{-1} \cdot U^H \qquad (4)$$

Man erkennt mit Gleichung (3), dass $H^{-1} \cdot H$ die Einheitsmatrix liefert. Die Diagonalmatrix $D^{-1}$ enthält die inversen Singulärwerte, die ebenso wie die Singulärwerte selbst über ein breites Band verteilt sind. Man sieht auch, dass insbesondere der kleinste Singulärwert, der gelegentlich auch nahe bei Null sein kann, einen entscheidenden Einfluss auf das in Gleichung (2) verbleibende und durch Multiplikation mit den inversen Singulärwerten entsprechend angehobene Rauschen nach der Rekonstruktion der gesendeten Datensignale hat. Die Singulärwertzerlegung ist echtzeitfähig, das heißt, sie lässt sich auch für größere Kanalmatrizen H mit modemen Mikroprozessoren in einer Zeit berechnen, die kurz ist im Vergleich zu den zeitlichen Veränderung des Kanals.

In der Aufwärtsrichtung wenden nun die zu sendenden Datensignale x vor dem Senden mit Hilfe von

$$x^* = V \cdot D^{-1} \cdot V^H \cdot x \qquad (5)$$

oder alternativ

$$x^* = V \cdot D^{-1} \cdot x \qquad (5a)$$

modifiziert (modifizierte Datensignale gekennzeichnet durch einen Stem *). Die beiden Arten der Kanalinversion in der Aufwärtsstrecke gemäß Gleichungen (5) und (5a) unterscheiden sich in der Art und Weise, wie die Daten auf die Hauptachsen im Senderaum verteilt werden. Im ersten Fall wird zwar der Kanal invertiert, aber jeder Datenstrom wird über alle Hauptachsen im Signalraum übertragen. Im zweiten Fall wird jeder Datenstrom auf eine Hauptachse im Signalraum transformiert und übertragen. Aus der Signalisierung ist kein Unterschied in der Leistungsfähigkeit beider Varianten zu erkennen, es ist jedoch zu vermuten, dass die erste Variante etwas robuster in Bezug auf Kanalschätzfehler ist, weil die Daten Ober alle Hauptachsen gespreizt werden.

Jede Sendeantenne sendet also eine andere Linearkombination der Datensignale x in den MIMO-Übertragungskanal, das heißt, der Sendevektor x wird in Gleichung (1) durch den modifizierten Sendevektor x* gemäß Gleichung (5) ersetzt. Die folgenden Ausführungen dienen der Veranschaulichung dieser senderseitigen Signalvorverarbeitung in der Aufwärtssenderichtung. Durch die Signalvorverarbeitung wird dafür gesorgt, das ein Datensignalstrom jetzt über alle n Antennen derart abgesendet wird, dass er genau in der Projektionsrichtung eines Einielkanals liegt. Dieses Vorgehen erfolgt für alle parallelen Einzelkanäle analog. Jetzt erfährt jeder Datensignalstrom dann die Streckung um den Kehrwert des zum Einzelkanal gehörenden Singulärwertes, das heißt, alle Datensignalströme würden ohne eine Signalvorverarbeitung unterschiedlich gut übertragen werden. Um dies auszugleichen, sendet man nunmehr die Datensignalströme in einem guten Einzelkanal mit weniger Leistung und gibt die eingesparte Leistung zusätzlich in einen Datensignalstrom in einem schlechteren Einzelkanal. In optimaler Weise wird dies durch die Multiplikation mit der inversen Diagonalmatrix $D^{-1}$ erreicht. Diese bewirkt eine Angleichung der Leistung der Datensignalströme in allen parallelen Einzelkanälen hinter der Streckung durch die Diagonalmatrix D. Analoges gilt für die Abwärtssenderichtung, die im übernächsten Absatz näher erläutert wird. Hier erfolgt die Vorverzerrung mit einer Pseudoinversen der transponierten Kanalmatrix, und es werden n Datensignale über m Antennen in n parallele Einzelkanäle eingekoppelt. Da es auf der Abwärtssenderichtung nur n Empfangsantennen gibt, kann die Signalvorverarbeitung hier so erfolgen, dass die Ausgänge der Einzelkanäle direkt den einzelnen Antennen zugeordnet sind, damit entfällt eine empfangsseitige Kanalentflechtung.

Ausgehend von Gleichung (5) müssen zur Rekonstruktion der Datensignale die Empfangssignale y noch in der Form

$$x' = V \cdot U^H \cdot y$$
$$= V \cdot U^H \cdot (H \cdot x^* + n)$$
$$= V \cdot U^H \cdot (U \cdot D \cdot V \cdot V^H \cdot D^{-1} \cdot V^H \cdot x + n)$$
$$= x + V \cdot U^H \cdot n \tag{6}$$

oder alternativ

$$x^3 = U^H \cdot y$$
$$= U^H \cdot (H \cdot x^* + n)$$
$$= U^H \cdot (U \cdot D \cdot V^H \cdot V \cdot D^{-1} \cdot x + n)$$
$$= x + U^H \cdot n \tag{6a}$$

empfangsseitig weiterverarbeitet werden (empfangene Datensignale gekennzeichnet durch einen Strich '). Man erkennt in der Zeile oberhalb von Gleichung (6) bzw. (6a), dass sich aus den vielen Matrizen letztendlich die Einheitsmatrix ergibt. Viel interessanter ist jedoch die Tatsache, dass sich der verbleibende Rauschterm ganz deutlich vom Ergebnis ohne senderseitige Signalverarbeitung gemäß Gleichung (2) unterscheidet. Im Unterschied zu $H^+$ verändern die Matrizen V und $U^H$ den isotropen Charakter des Rauschen nicht, das heißt, der Einfluss der Singulärwertzerlegung auf das Rauschen wird mit den Gleichungen (5) und (6) vollständig eliminiert. Die Bitfehlerrate hängt also ganz ähnlich wie im additiven weiß verrauschten Kanal nur noch vom Signal-zu-Stör-Leistungsverhältnis am Empfänger ab und nicht mehr von den Kanaleigenschaften. Für eine fehlerfreie Datenübertragung im MIMO-Kanal, d.h. für die bei Echtzeitanwendungen geforderte Bitfehlerwahrscheinlichkeit kleiner als $10^{-9}$, mit dem adaptiven Signalverarbeitungsverfahren nach der Erfindung wird deshalb im Mittel eine wesentlich niedrigere Sendeleistung als bei dem bekannten Signalverarbeitungsverfahren ("zero forcing") gemäß Gleichung (2) benötigt.

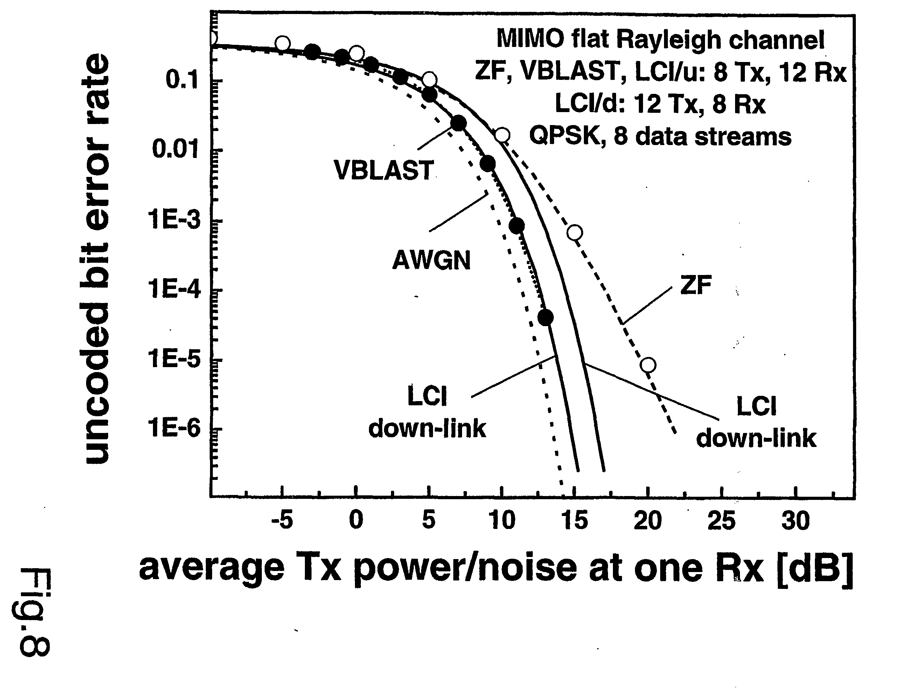

Die Sendeleistung erhöht sich aufgrund der senderseitigen Signalverarbeitung in Aufwärts- und Abwärtsstrecke um den Faktor n/(n-m). Hierdurch wird Gleichung (6) bzw. (6a) herbeigeführt, das heißt, ohne Rauschen ist der Kanal transparent (x'=x). In der Aufwärtsstrecke wird das Rauschen aber zusätzlich mit den Matrizen V und $U^H$ multipliziert. Hierdurch reduziert sich die Dimension des isotrop verteilten, zufälligen Rauschvektors von m auf n, das heißt, Im Mittel wird der Vektor kurzer. Wenn nun anstelle der Empfangsleistung wie oben die Sendeleistung als Bewertungskriterium für die Signalverarbeitungsverfahren benutzt wird, dann ist die Bitfehletrrate der Kanalinversion in Aufwärtsrichtung bei gleicher Antennenanzahl in etwa vergleichbar mit der Bitfehlerrate des bekannten V-BLAST-Verfahrens (vergleiche Figur 8). Die Kanalinversion benötigt hierfür aber nur jeweils eine lineare Matrix-Vektor-Multiplikation am Sender und am Empfänger, während das V-BLAST-Verfahren mehrere Matrix-Vektor-Multiplikationen nacheinander am Empfänger ausführen muss. Andererseits werden für die Kanalinversion deutlich längere Pilotsequenzen benötigt als für das V-BLAST-Verfahren, was nur für höhere Datenraten praktikabel erscheint.

Noch einfacher sind die Verhältnisse bei dem adaptiven Signalverarbeitungsverfahren nach der Erfindung in der Abwärtssenderichtung. Hier wird das Sendesignal lediglich mit einer rechtsseitigen Pseudoinversen der Kanalmatrix multipliziert. Wenn die Kanalschätzung in der Aufwärtssenderichtung und die Datenübertragung in der Abwärtssendenchtung bei der gleichen Frequenz arbeiten und die Kanalmatrix in Aufwärtsrichtung durch H gegeben ist, dann ist $H^T$ die Kanalmatrix in der Abwärtsrichtung, d.h. in Gleichung (1) wird H durch die Transponierte $H^T$ ersetzt. Dies folgt aus der Annahme der sogenannten "Reziprozität" des Funkkanals. Wenn man ein beliebiges Paar aus jeweils einer Antenne auf beiden Seiten des MIMO-Kanals bildet, dann haben die zugehörige Auf- und Abwärtssendestrecke in einem Zeitfenster dieselben Kanaleigenschaften, solange noch keine zeitliche Änderung eingetreten ist Eine mögliche rechtsseitige Inverse kann man mit Hilfe von $(H^{-1})^T$, also der transponierten Moore-Penroose-Pseudoinversen, finden. Letztere minimiert die mittlere Sendeleistung im Fall von Rayleigh-fading. Die Sendedaten werden also mit $(H^{-1})^T$ multipliziert

$$x^* = \left(H^{-1}\right)^T \cdot x \qquad\qquad (7)$$

das heißt, s wird in Gleichung (1) durch s* gemäß Gleichung (7) ersetzt. Man sieht in der folgenden Gleichung (8), dass die ursprünglich gesendeten Datensignale dadurch bereits empfangsseitig vollständig rekonstruiert werden:

$$x' = H^T \cdot x^* + n$$
$$= H^T \cdot \left(H^{-1}\right)^T \cdot x + n$$
$$= x + n$$
$$= y \qquad\qquad (8)$$

Zu den gesendeten Datensignalen kommt nur noch das Eigenrauschen der einzelnen empfangsseitigen Antennenzweige/-verstärker hinzu. Am Empfänger kann also von derselben Bitfehlerrate wie im additiv weiß verrauschten Kanal ausgegangen werden. Insbesondere ist mit einer Signalverarbeitung gemäß den Gleichungen (7) und (8) schon bei vergleichsweise recht niedrigen Sendeleistung eine nahezu fehlerfreie Datenübertragung bei dem erfindungsgemäßen adaptiven Signalverarbeitungsverfahren möglich.

Das Konzept zur Signalverarbeitung nach der vorliegenden Erfindung lässt sich in der Praxis besonders leicht umsetzen, denn man muss den Datensignalvektor in der Aufwärtssenderichtung sender- und empfangsseitig jeweils nur mit einer Matrix multiplizieren. In der Abwärtssenderichtung wird der Datensignalvektor nur senderseitig mit einer Matrix multipliziert. Hierbei handelt es sich um lineare algebraische Operationen, die sich wesentlich einfacher realisieren lassen als die rekursive empfangsseitige Signalverarbeitung bei dem bekannten BLAST-Verfahren, bei dem insbesondere auch eine Reihe nicht-linearer Entscheidungen gefällt werden, die die Eigenschaft der Fehlerfortpflanzung aufweisen. Das lineare Signalverarbeitungsverfahren nach der Erfindung ist wesentlich besser für eine Echtzeitübertragung mit hohen Datensignalraten geeignet Zusätzlich kann man bei einer gleichen Empfangsleistung deutlich niedrigere Bitfehlerraten realisieren.

Um diese Vorteile nutzen zu können, müssen drei wesentliche Voraussetzungen erfüllt sein, die mit Hilfe von Simulationen bereits im Detail untersucht wurden. Zum einen muss auf einer Seite des MIMO-Übertragungskanals aus Gründen der begrenzten Sendeleistung mindestens eine Antenne mehr benutzt werden als auf der anderen Seite. Besser geeignet ist jedoch die Hinzunahme weiterer Antennen in der Abwärtssendestation, um die Senderdynamik weiter zu reduzieren. Die zweite Voraussetzung ist, dass eine relativ genaue Kanalschätzung benötigt wird. Die Streuung des Schätzfehlers sollte etwa um den Faktor 3 kleiner sein als bei dem bekannten BLAST-Verfahren. Um möglichst kleine Bitfehlerraten zu erreichen, können deshalb bei einer möglichen Realisierung der Kanalschätzung beispielsweise mit orthogonalen Pilotsequenzen nach Jungnickel et al. **[7]** Sequenzen mit einer Länge von etwa 100 Symbolen eingesetzt werden. Daraus ergibt sich die dritte Voraussetzung: Die Symbolrate, die sich in Abhängigkeit von dem gewählten Modulationsverfahren aus der Datensignalrate ergibt, sollte bei höchstens 20% relativen Zeitaufwand für die Kanalschätnmg größer als 150 kSymbole/s sein. Diese Forderung ist beispielsweise in Innenräumen in Abhängigkeit von den Kanaleigenschaften ohne Weiteres erfüllbar. Im BLAST-Demonstrator wurde eine Symbolrate von 30 kHz verwendet und es wurden abwechselnd 20 Symbole für die Kanalschätzung und 80 Datensymbole gesendet. Folglich war eine Kanalschätzung für $\tau$ = 3,3 ms gültig. Bei den in Indoor-Umgebungen bei einer Trägerfrequenz von 5 GHz und Geschwindigkeit bis zu 1 m/s zu erwartenden Dopplerfrequenzen von maximal $f_D$ = 17 Hz würde sich in dieser Zeit eine Phasenänderung von $\Delta\phi = 2\pi f_D$ = 10° ergeben, was für die Detektion höherwertig modulierter Datensignale (z.B. 16-QAM) hinreichend klein ist. Mit 100 Symbolen würde man allerdings die gesamte Übertragungszeit für die Kanalschätzung verlieren. Wenn man aber eine höhere Symbolrate als in BLAST einsetzt, z.B. in drahtlosen lokalen Netzen (WLAN), dann reduziert sich die Dauer des Zeitfensters, das für die Kanalschätzung verloren geht Bei einer Symbolrate von z.B. 1 MHz werden in 3,3 ms 3300 Symbole gesendet. Eine Kanalschätzung mit 100 Symbolen würde dann also nur noch ca. 3% der insgesamt verfügbaren Zeit benötigen. In der Aufwärtssenderichtung benötigt man für die Kanalschätzung allerdings die doppelte Zeit, weil auf beiden Kanalseiten der Kanal bekannt sein muss. Die MIMO-Kanalinversion bei dem erfindungsgemäßen Signalverarbeitungsverfahren lässt sich daher nur bei höheren Symbolraten oberhalb von 100 kSymbole/s, insbesondere ab 150 kSymbole/s, sinnvoll einsetzen.

Im Folgenden soll das adaptive Signalverarbeitungsverfahren nach der Enindung in einem MIMO-Kanal und in besonderer Weise geeignete Ausbildungen eines MIMO-Systems zur Verfahrensdurchführung anhand von schematischen Figuren noch näher erläutert werden. Dabei zeigt

**Figur 1**   die Signalverarbeitung im MIMO-Kanal in Auf- und Abwärtssenderichtung,
**Figur 2**   ein bidirektionales MIMO-System mit Kanalinversion,
**Figur 3**   eine mögliche Kanalschätzung und Gewichtung,
**Figur 4**   eine Korrelationsschaltung mit orthogonalen Sequenzen für die Kanalschätzung gemäß Figur 3,
**Figur 5**   eine MIMO-Kanalschätzung im TDD-Modus,
**Figur 6**   eine MIMO-Kanalschätzung im FDD-Modus,
**Figur 7**   verschiedene Bitfehlerratenkurven als Funktion des mittleren Signal-zu-Rausch-Verhältnisses,
**Figur 8**   verschiedene Bitfehlerratenkurven als Funktion der Gesamtsendeleistung und
**Figur 9**   die sende- und empfangsseitige Leistungsverteilung aus einer Simulation.

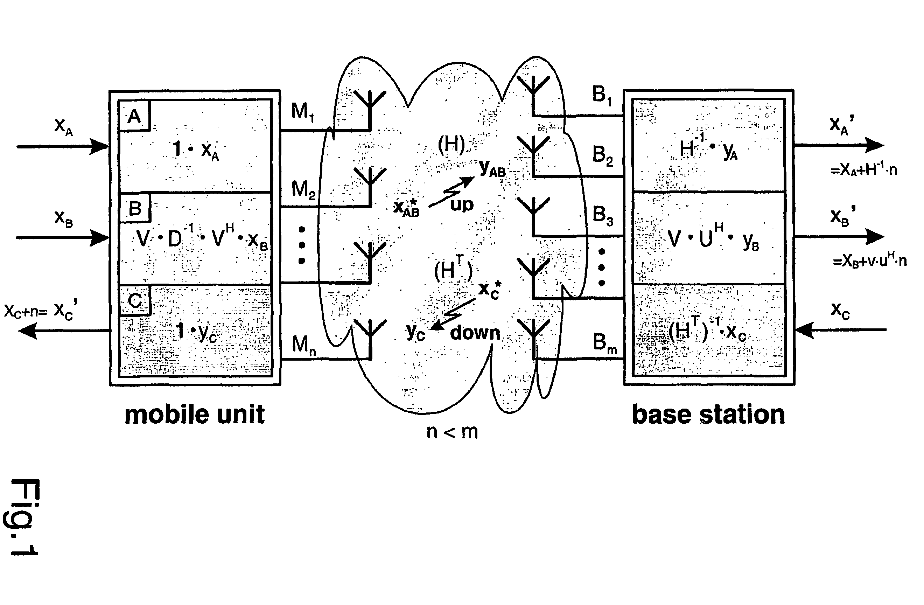

Die verschiedenen Übertragungsschemata im MIMO-Kanal sind in der **Figur 1** dargestellt. Schema A bezeichnet das einfachste denkbare MIMO-System, das ausschließlich mit empfängerseitiger Signalverarbeitung auskommt und aus dem Stand der Technik (vgl. beispielsweise [6]) bekannt ist. Schema B zeigt die sende- und empfangsseitige Signalvor- bzw. -nachverarbeitung nach der Erfindung bei Kanalinversion in der Aufwärtssenderichtung und Schema C zeigt die ausschließlich senderseitige Signalvorverarbeitung nach der Erfindung bei Kanalinversion in der Abwärtssenderichtung. Bei dem dargestellten MIMO-System wird die Aufwärtssendestation von einer Mobilstation (mobile unit) mit n Antennen (1...n) und die Abwärtssendestation von einer Basisstation (base station) mit m Antennen (1....m) gebildet. Es gilt : n < m. Die sendeseitig auf die Sendevektoren x und empfangsseitig auf die Empfangsvektoren y anzuwendenden Rechenoperationen, die im allgemeinen Beschreibungsteil an dem Beispiel der linearen Singulärwertzerlegung erläutert wurden, sind den jeweiligen Stationen zugeordnet. Die modifizierten Sendesignale sind mit einem Stern, die rekonstruierten Datensignale mit einem Strich, die Aufwärtssenderichtung mit "up" und die Abwärtssenderichtung mit "down" (grau hinterlegt) gekennzeichnet.

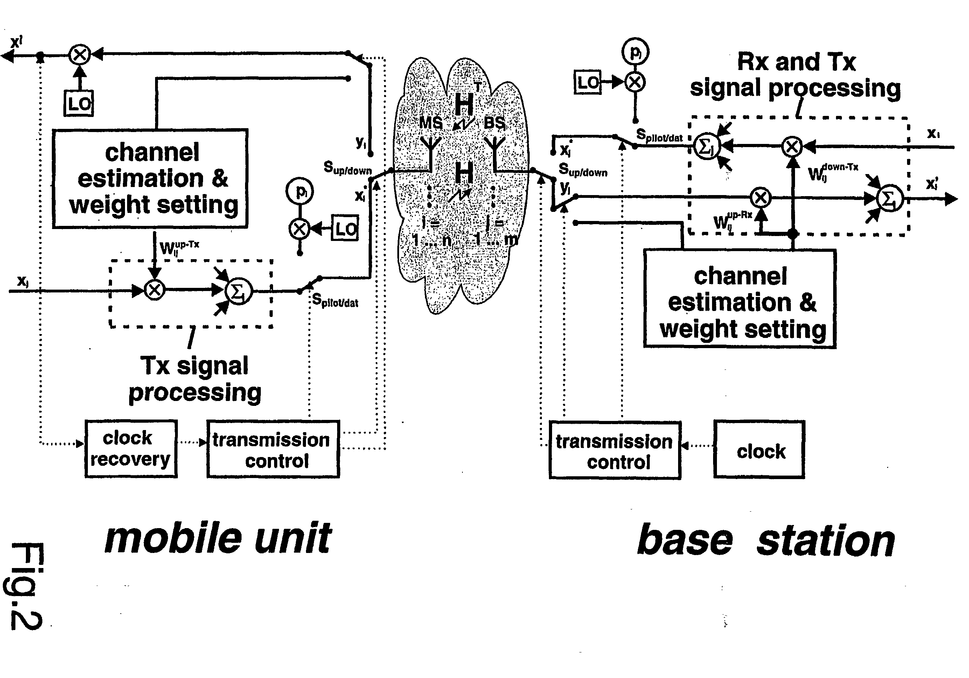

**Figur 2** zeigt ein Übersichtsschaltbild des MIMO-Übertragungssystems nach der Erfindung gemäß Schema B mit einer sendeseitigen Signalvorverarbeitung (Tx signal processing) und einer empfangsseitigen Signalnachverarbeitung (Rx signal processing). Die Aufwärtssendestation und die Abwärtssendestation wurden hier in Anlehnung an ein zellulares Mobilfunkszenario mit "mobile unit" und "base Station" bezeichnet Aufbauend auf einer Schätzung des Kanals mit der transponierten Kanalmatrix $H^T$ in der Abwärtsrichtung werden in der Einheit zur Kanalschätzung und Wichtung (channel estimating & weight setting) im Mobilgerät (mobile unit) die Gewichte für die senderseitige Signalverarbeitung mit Hilfe der Kanalmatrix H und Gleichung (5) berechnet Sie geben an, wie die einzelnen Datensignale in das jeweils über eine Antenne zu sendende Signal einfließen. Die gewichteten Beiträge werden dann getrennt aufsummiert und man erhält die Sendesignale x*, die gleichzeitig Ober den MIMO-Kanal übertragen werden. Die nachfolgende Signalverarbeitung am Empfänger basiert auf einer zusätzlichen Schätzung der Kanalmatrix H in der Aufwärtssenderichtung. Die Gewichte werden anhand von Gleichung (6) berechnet und die einzelnen Datensignale x' werden ebenso wie bereits am Sender als Linearkombination der Empfangssignale y rekonstruiert. Die in der Abwärtssenderichtung zu sendenden Datensignale x werden mit Gewichten gemäß Gleichung (7) multipliziert, die aus einer Schätzung der Kanalmatrix H in der Aufwärtssenderichtung gewonnen wurden. Aus den jeweiligen Summen ergeben sich die Sendesignale x*. Wie in Gleichung (8) gezeigt, benötigt man in der Abwärtssenderichtung keine Signalverarbeitung am Empfänger. Folglich ergeben sich die rekonstruierten Daten x' direkt aus den Basisbandsignalen y der einzelnen Empfänger.

Für die Kanalschätzung wird jede Antenne ähnlich wie in [7] durch eine für sie charakteristische PN-Sequenz $p_i$ (Pseudo Noise) identifiziert, die vorzugsweise mittels binärer Phasenumtastung auf den Träger aufmoduliert und mit Hilfe eines schnellen Analogschalters $S_{Pilot/Data}$ zu bestimmten Zeiten anstelle der Datensignals gesendet wird. Die Einkopplung der Pilotsignale nach Modulation und senderseitiger Signalverarbeitung erlaubt unterschiedliche Modulationsverfahren für Pilot- und Datensignale.

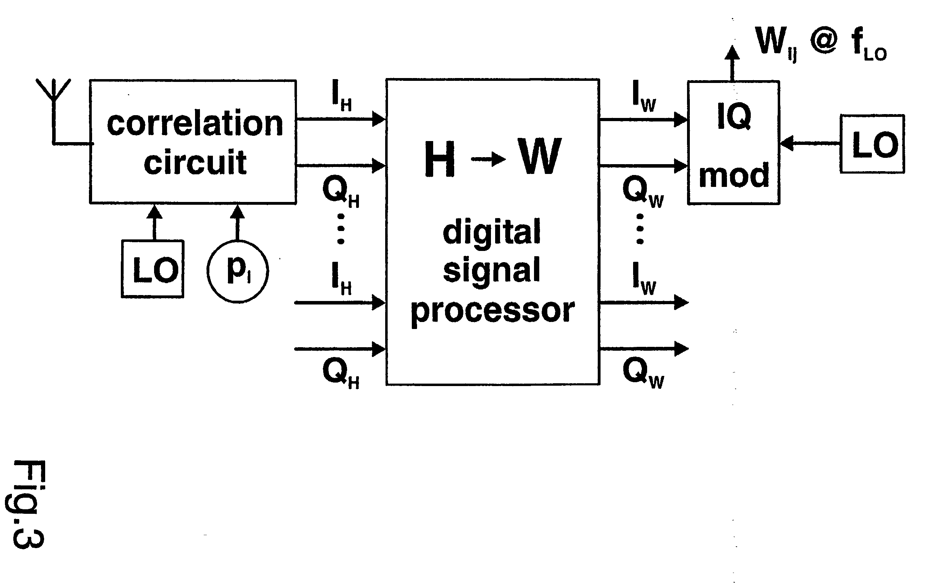

**Figur 3** zeigt das Prinzip der Kanalschätz- und Gewichtungseinheit. Zunächst wird in jeweils einer Korrelationseinheit (correlation circuit) Realteil $I_H$ und Imaginärteil $Q_H$ jedes einzelnen Eintrags in der Kanalmatrix H geschätzt. Die analogen Daten werden dann digitalisiert und in einen digitalen Signalprozessor (digital signal processor) eingelesen. Hier wird die Gewichtsmatrix W berechnet und in Form ihres Realteils $I_W$ und ihres Imaginärteils $Q_W$ ausgegeben. Für eine analoge Realisierung der Signalverarbeitung müssten die Gewichte nun wieder vom Digitalen ins Analoge gewandelt werden (hierdurch soll aber eine rein digitale Weiterverarbeitung der Signale nicht ausgeschlossen werden). Bei der analogen Weiterverarbeitung werden die Signale anschließend auf einen IQ-Modulator (IQ-Mod) gegeben. Er ist in der Lage, Amplitude und Phase des Lokaloszillators (LO) entsprechend dem jeweiligen Gewicht zu verändern. Der LO dient hierbei als Träger der Gewichtsinformation. Mit Hilfe des derart veränderten LO-Signals wird jedes einzelne Empfangssignal individuell ins Basisband umgesetzt. Das weitere Vorgehen wurde bereits zu Figur 2 beschrieben.

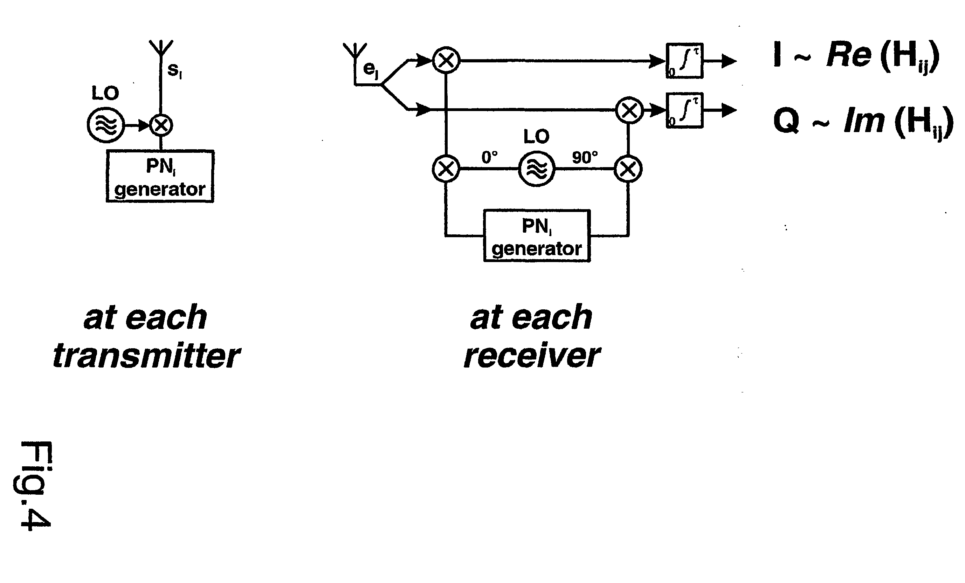

**Figur 4** zeigt die Einheit zur Schätzung eines komplexweragen Eintrags in der Kanalmatrix H. Hier wird beispielhaft nur die Realisierung im Übertragungsband dargestellt. Eine ähnliche Realisierung ist auch in der Zwischenfrequenz möglich oder kann mittels komplexwertiger Multiplikationen auch direkt im Basisband erfolgen. Während einer Kanalschätzung senden alle Antennen gleichzeitig zueinander orthogonale Sequenzen, anhand dener sie bei der Kanalschätzung identifiziert werden können. Angenommen, das Matrixelement $H_{ij}$ soll gemessen werden. Dazu wird das j-te Empfangssignal $e_j$ einer Korrelationsschaltung zugeführt. Ein Generator erzeugt dieselbe Sequenz, mit der die i-te Sendeantenne identifiziert wird, und moduliert sie zunächst auf den LO sowie auf eine um 90° phasenverschobene Kopie des LO. Diese beiden Referenzsignale werden dann mit dem Empfangssignal $e_j$ multipliziert und die beiden Ergebnisse werden über die Gesamtdauer einer Sequenz integriert. in [7] wurde gezeigt, dass man mit dieser Anordnung Realteil $I_H$ und Imaginärteil $Q_H$ des Matrixelements $H_{ij}$ unabhängig voneinander messen kann. Aufgrund der Orthogonalität der Sequenzen stören die gleichzeitig gesendeten Pilotsignale der anderen Antennen das Schätzergebnis nicht Das weitere Vorgehen wurde bereits anhand von Figur 3 beschrieben.

In dem MIMO-System nach der Erfindung wird die Reziprozität des Funkkanals explizit ausgenutzt, um auf einen Rückkanal gemäß US-PS 6.131.016 **[8]** verzichten zu können. Reziprozität bedeutet, dass zwischen einer Antenne an der Mobilstation und einer Antenne an der Basisstation der Funkkanal in Aufund Abwärtssenderichtung bis auf wenige, sehr selten vorkommende Ausnahmen vollkommen identisch ist. Aus der Vorstellung, dass das empfangene Funksignal aus einer Anzahl von Echosignalen besteht, die jeweils unterschiedliche Wege gegangen sind, kann gezeigt werden, dass Amplituden- und Phäsengang jedes einzelnen Echosignals in beiden Übertragungsrichtungen identisch, das heißt reziprok, sind. Hieraus folgt die Reziprozität auch für das Gesamtsignal. In Abwesenheit von Gleichkanalstörungen kann man folglich die Parameter aus der Kanalschätzung in der Aufwärtssenderichtung unmittelbar für die Datenübertragung in der Abwärtssenderichtung wiederverwenden und umgekehrt, vorausgesetzt man verwendet für beide Richtungen abwechselnd dieselbe Trägerfrequenz (Zeitduplex Übertragung, TDD). Dem Sender können die Kanalkoeffizienten auf diese Weise schon a-priori bekannt sein. Er kann durch die senderseitige Signalvorverarbeitung die Signalleistung in jedem Einzelpfad entsprechend anpassen.

Um die Robustheit gegen Gleichkanalstörungen zu erhöhen, ist zwangsläufig zu einer Lösung mit Rückkanal zu greifen, da der Sender die Störsituation am Empfänger grundsätzlich nicht a-priori kennen kann. Man kann zunächst so wie oben verfahren, das heißt, man benutzt die Reziprozität und maximiert damit die Signalleistung in allen Einzelkanälen. Anschließend misst man am Empfänger in jedem einzelnen Datensignalpfad die Störleistung $P_{Stör}$ nach der räumlichen Signalverarbeitung und schickt nur Informationen über die Größe der Störleistung in den einzelnen Datenkanälen über den Rückkanal zum Sender zurück. Die hierfür notwendige Datenrate ist im obigen Beispiel um den Faktor 24 kleiner als bei Rückübertragung aller Parameter für die Kanalschätzung. Am Sender werden die zu sendenden Datensignale dann bereits vor der senderseitigen Signalverarbeitung (Matrixmultiplikation) in ihrer Leistung so angepasst, dass alle Empfangssignale das gleiche Signal-zu-Stör-plus-Rausch-Leistungsverhältnis (SINR) aufweisen (Leistungsregelung im Einzelkanal).

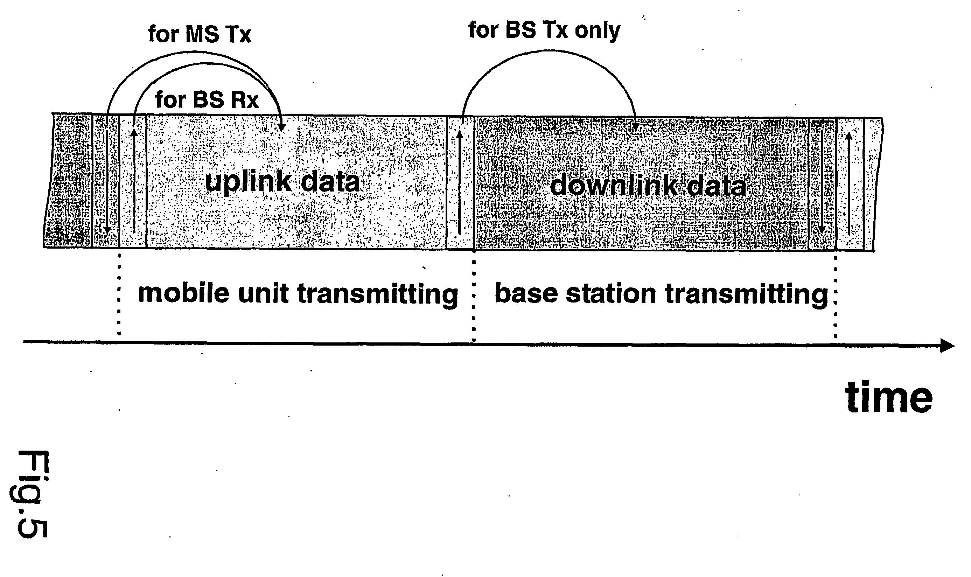

Am einfachsten kann das Wiederverwenden der Kanalschätzung aus der Gegenrichtung im Zeitduplex (TDD) erklärt werden. Hierbei teilen sich Auf- und Abwärtssenderichtung eine Trägerfrequenz und werden zu verschiedenen Zeiten betrieben. Eine mögliche Zeitaufteilung, die mit Hilfe der Verbindungssteuerung (transmission control) und der diversen Analogschalter gemäß Figur 2 realisiert wird, zeigt die **Figur 5.** Für die Aufwärtssenderichtung (uplink data) wird eine Kanalschätzung in Mobil- und Basisstation (MS, BS) benötigt. Hierzu sendet die Basisstation zunächst ihre Pilotsequenzen (base station transmitting), sodass die Mobilstation ihre Sendegewichte einstellen kann. Anschließend sendet die Mobilstation (mobile unit transmitting) ihre Antennensequenzen und die Basisstation stellt die Empfangsgewichte ein. Nun ist die Verbindung richtig eingestellt und es können Daten übertragen werden. Vor dem Wechsel der Übertragungsrichtung sendet die Mobilstation noch einmal kurz ihre Antennensequenzen, sodass die Basisstation ihre Gewichte für die Abwärtssenderichtung auf der Basis einer aktuellen Kanalschätzung einstellen kann. In der Mobilstation ist in Abwärtsrichtung also keine Kanalkenntnis notwendig.

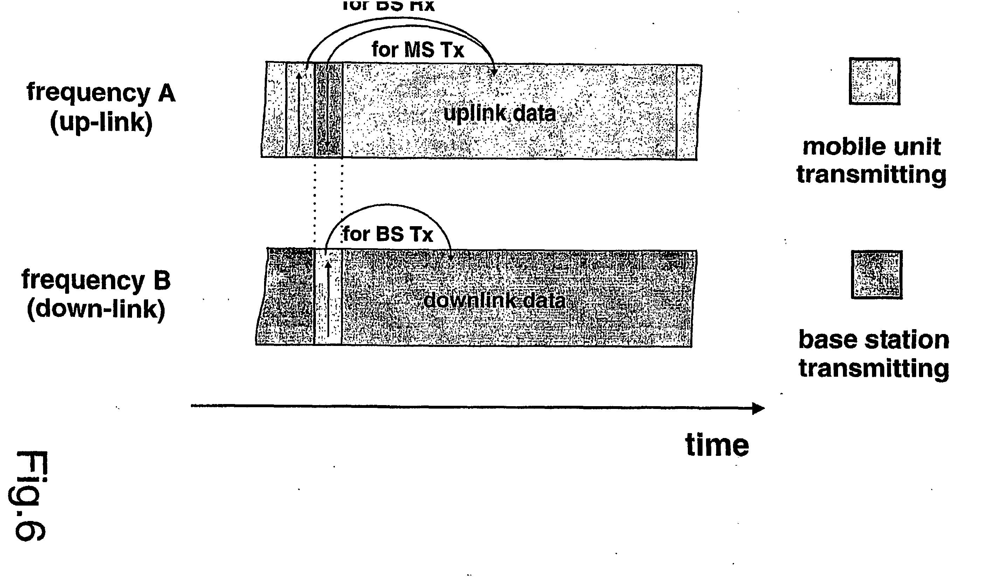

Im Frequenzduplex (FDD) ist der zeitliche Ablauf etwas komplizierter. Aufwärts- und Abwärtssenderichtung verwenden hierbei unterschiedliche Frequenzen zur selben Zeit. Hierbei muss man beachten, dass Reziprozität nur für ein und dieselbe Trägerfrequenz gilt. Mobil- und Basisstation müssen also für die Zeit der Kanalschätzung jeweils mit der Trägerfrequenz betrieben werden, die für die Übertragung in die vorgesehene Richtung verwendet wird. Die Lokaloszillatoren in Mobil- und Basisstation und die jeweils zugehörige Synchronisationseinheit müssen daher schnell umschaltbar auf beiden Frequenzen arbeiten können. Eine mögliche Zeitaufteilung ist in **Figur 6** für beide Frequenzen dargestellt. Für die Aufwärtssenderichtung (uplink data) wird eine Kanalschätzung in Mobil- und Basisstation für die Frequenz A benötigt. Hierzu sendet zunächst die Mobilstation ihre Pilotsequenzen, sodass die Basisstation ihre Empfangsgewichte einstellen kann. Anschließend sendet auch die Basisstation ihre Pilotsequenzen auf Frequenz A und die Mobilstation stellt ihre Sendegewichte ein. In der Abwärtssenderichtung wird eine Kanalschätzung nur in der Basisstation benötigt. Da die Sender in der Mobilstation gleichzeitig nur auf einer Frequenz arbeiten können, bietet es sich an, dass die Mobilstation ihre Pilotsequenzen in der gleichen Zeit auf Frequenz B aussendet, in der sie die Kanalschätzung in Abwärtsrichtung auf der Frequenz A durchführt. Hierzu müssen die Sende-/Empfangsumschalter $S_{up/down}$ an den Antennen gemäß Figur 2 durch frequenzselektive Filter (Zirkulatoren) ersetzt werden. Die Basisstation führt auf Frequenz B eine Kanalschätzung durch, stellt ihre Sendegewichte ein und sendet Daten in Abwärtsrichtung auf Frequenz B.

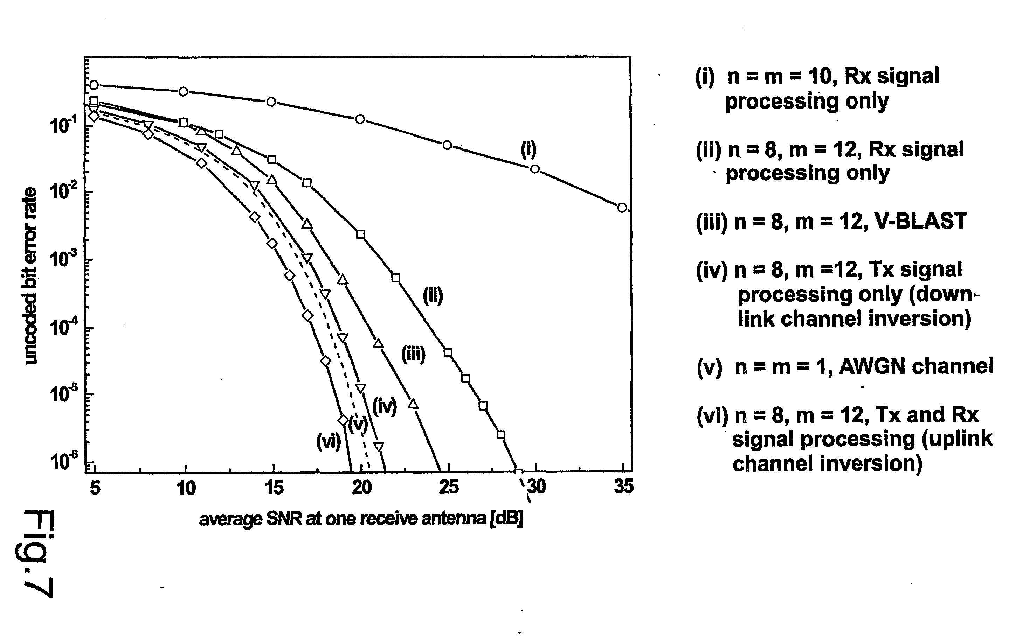

**Figur 7** zeigt verschiedene Bitfehlerratenkurven als Funktion des mittleren Signal-zu-Rausch-Verhältnisses an einer Empfangsantenne als Simulationsergebnisse. Dargestellt ist die Bitfehlerrate einer Systemsimulation mit zufälligen Fehlern in der Kanalschätzung entsprechend einer Sequenzlänge von 128 Symbolen (BPSK-Modulation für die Pilotsequenzen, 16-QAM-Modulation für die Datensignale) als Funktion des Signal-zu-Rausch-Verhältnisses an einer Empfangsantenne für die drei Übertragungsschemata A, B und C gemäß Figur 1. Zur Orientierung wurden auch V-BLAST sowie eine Einkanal- Übertragung im weiß verrauschten Kanal (AWGN) dargestellt. Zunächst erkennt man, dass mit rein empfangsseitiger Signalverarbeitung (Rx signal processing only) und gleicher Anzahl von Antennen auf beiden Seiten (Kurve i, n=m=10) extrem hohe Bitfehlerraten auftreten, die auch durch Erhöhung des Signal-zu-Rausch-Leistungsverhältnisses (SNR) nur geringfügig kleiner werden. Man benötigt in diesem Fall etwa 10 mal mehr SNR, um die Bitfehlerrate um einen Faktor 10 zu reduzieren. Dies ist auf den Einfluss des Terms $H^{-1}n$ in Gleichung (2) zurückzuführen. Bei gleicher Antennenanzahl ist die Wahrscheinlichkeit sehr hoch, dass sehr kleine Singulärwerte als Anzeichen einer nahezu singulären Kanalmatrix H auftreten. Aufgrund von Gleichung (4) wird das Rauschen durch die Signalverarbeitung erheblich angehoben und die Bitfehlerrate ist hoch. Die Hinzunahme von Antennen am Empfänger (Kurve ii, n=8, m=12) bringt bereits einen erheblichen Gewinn (z.B. benötigt man mit 8 Sende- und 12 Empfangsantennen eine um 16 dB niedrigere Sendeleistung für eine Bitfehlerrate von 0,01 als mit je 10 Sende- und Empfangsantennen). Das V-BLAST Verfahren (Kurve iii, n=8, m=12) reduziert den Einfluss der Signalverarbeitung auf das Rauschen noch stärker durch eine geschickte rekursive Detektion der einzelnen Datensignalströme. Der Rechenaufwand hierfür ist jedoch relativ hoch.

Die Kurven mit senderseitiger Signalverarbeitung (Kurven iv und vi) in **Figur 7** kommen wie erwartet dem weiß verrauschten Kanal (Kurve v, n=m=1, AWG channel) sehr nahe. In Abwärtssenderichtung (Kurve iv, downlink channel inversion) ist die geringfügige Abweichung ein Ergebnis der fehlerbehafteten Kanalschätzung. In Aufwärtssenderichtung mit sende- und empfangseitiger Signalverarbeitung (Kurve vi, n=8, m=12, Tx and Rx signal processing, uplink channel inversion) findet man als Funktion des Signal-zu-Rausch-Verhältnisses am Empfänger anscheinend sogar noch niedrigere Bitfehlerraten als im AWGN-Kanal. Dies erweist sich jedoch bei genauerer Betrachtung als artefact. Durch die Multiplikation mit $VU^H$ wird der 12-dimensionale Rauschvektor n in eine 8-dimensionale Hyperebene projiziert. Hierdurch reduziert sich die Rauschleistung zunächst um den Faktor 8/12, was einem Gewinn von 1,5 dB entspricht. Allerdings ist in Aufwärtssenderichtung auch die mittlere Empfangsleistung pro Sendeantenne geringer als in Abwärtssenderichtung, weil die Signale an den Antennen noch nicht vollständig dekorreliert sind. Wenn man die Leistungsbilanz am Empfänger je übertragenem Bit betrachtet, verhält sich die Bitfehlerrate bei Kanalinversion in Auf- und Abwärtssenderichtung im Wesentlichen gleich. Unterschiede ergeben sich nur dadurch, dass die Signalverarbeitung in Abwärtssenderichtung nur auf einer Kanalschätzung an der Basisstation beruht, während in Aufwärtssenderichtung zwei voneinander unabhängige Schätzungen von H an der Basisstation und von $H^T$ an der Mobilstation benutzt werden. Hierbei ist allerdings noch nicht eingerechnet, dass die Sendeleistung aufgrund der senderseitigen Signalverarbeitung abhängig von der aktuellen Kanalmatrix H modifiziert wird.

Ein aussagekräftiger Vergleich zwischen den einzelnen Verfahren ist jedoch erst möglich, wenn die Bitfehlerrate als Funktion der Sendeleistung darstellt wird.

In der **Figur 8** sind verschiedene Bitfehlerratenkurven als Funktion der Gesamtsendeleistung bezogen auf Rauschteistung an einem Empfänger aus einer Simulation (V-BLAST) bzw. aus analytischen Betrachtungen (LCI, AWGN im Einzelkanal) gezeigt. Da die Sendeleistung bei Kanalinversion statistisch verteilt ist, ist es fair, die Kurven über der mittleren Sendeleistung, bezogen auf das Rauschen an einem Empfänger, darzustellen. In [9] wird aufbauend auf [10] gezeigt, dass die Bitfehlerratenkurve mit Kanalinversion prinzipiell ähnlich der Bitfehlerrate in einem einzelnen AWGN-Kanal ist. Allerdings ist die Kurve in Abwärtssenderichtung (down-link) um den Faktor n/(m-n) gegenüber der AWGN-Kurve verschoben. In Aufwärtssenderichtung kommt der schon oben beschriebene Effekt dazu, dass n Datensignale mit m Empfangsantennen detektiert werden, was einem Gewinn von 10*log(m/n) entspricht. Folglich ist die Bitfehlerratenkurve um diesen Faktor nach links verschoben. Der Vergleich mit anderen Verfahren, die mittels empfängerseitiger Signalverarbeitung arbeiten, wird möglich, wenn üblicherweise angenommen wird, dass der mittlere Pfadveriust eines Eintrags in H auf eins normiert ist. Ohne senderseitige Signalverarbeitung findet man dann an jedem Empfänger im Mittel über viele Kanalrealisierungen die volle Sendeleistung vor. Somit kann man die bekannten Bitfehlerratenkurven mit der obigen Normierung des Pfadverlusts "wiederverwenden", weil das mittlere SNR je Empfangsantenne gleich der Sendeleistung, geteilt durch das Rauschen an einem Empfänger, ist. Zum Vergleich hält man die mittlere Sendeleistung bei Kanalinversion fest und trägt die AWGN-artigen Kurven unter Beachtung der o.g. Verschiebung ein. Man erkennt, dass die Kanalinversion in Aufwärtsrichtung in etwa vergleichbar ist mit V-BLAST, während man in Abwärtsrichtung ca. 1.7 dB mehr Leistung braucht, da die Nachbearbeitung am Empfänger fehlt. Die isotrope Rauschverstärkung erkennt man am wesentlich steileren Abfall der Kurven für die Kanalinversion im Vergleich mit dem Zero Forcing Verfahren.

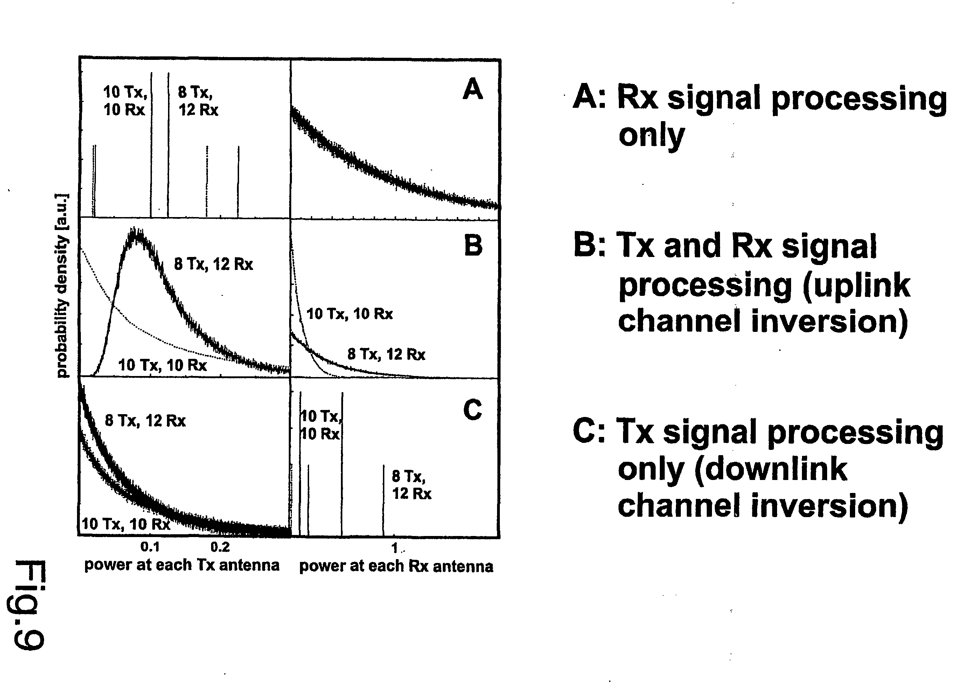

**Figur 9** zeigt die sende- und empfangsseitigen Leistungsverteilungen (power at each Tx antenna, power at each Rx antenna) für die einzelnen Schemata A, B, C gemäß Figur 1. In Schema A (nur empfangsseitige Signalverarbeitung) findet man an jedem Sender drei diskrete Linien, die sich in ihrer Lage nur durch die Anzahl der Sendeantennen unterscheiden. Alle Sendeantennen strahlen im Mittel die gleiche Leistung ab und die Linien resultieren aus den möglichen Symbolenergien bei der gewählten 16-QAM Modulation. An jedem Empfänger erhält man für die Leistung aufgrund der statistischen Natur des Funkkanals eine breit gestreute $\chi^2$-Verteilung mit zwei Freiheitsgraden. Die Verteilung hängt nicht von der Anzahl der Sendeantennen ab, weil die Gesamtleistung der Datenströme normiert ist und die einzelnen Übertragungskanäle statistisch unabhängig sind.

Bei Kanalinversion in der Aufwärtssenderichtung gemäß Schema B (sendeund empfangsseitige Signalverarbeitung) findet man an Sender und Empfänger eine kontinuierliche Leistungsverteilung. Man erkennt, dass die Verteilung wesentlich stärker um eine mittlere Sendeleistung lokalisiert ist, wenn man an der Basisstation mehr Antennen verwendet. Man benötigt also eine wesentlich kleinere Dynamik, was den Einsatz kostengünstigerer Verstärker möglich macht. Mit gleicher Antennenanzahl hat die Verteilung einen zu hohen Sendeleistungen hin weit ausgedehnten Ausläufer. Insbesondere konvergiert der statistische Mittelwert nicht gegen einen festen Wert, wenn man den Wertebereich für die Sendeleistung vergrößert. Das erschwert die Dimensionierung des Sendeverstärkers.

In der Abwärtssenderichtung mit Kanalinversion gemäß **Schema C** findet man bei m=n=10 ein ähnliches Verhalten am Sender wie in der Aufwärtssenderichtung mit Kanalinversion (Schema B). Allerdings kann man für die Verteilung mit ungleicher Antennenanzahl diesmal keinen unteren Grenzwert angeben, d.h. die Senderdynamik ist nach unten hin nicht begrenzt. In der Abwärtssenderichtung findet man jetzt, unabhängig von der Wahl der freien Parameter, am Empfänger die drei scharfen Linien wieder, die aus der 16-QAM-Modulation resultieren.

Anhand der gemachten Ausführungen in Verbindung mit der Figur 1 können je nach Anwendung verschiedene MIMO-Systeme realisiert werden. Dabei wird davon ausgegangen, dass die Aufwärtssendestation von einer ortsveränderlichen Mobilstation und die Abwärtssendestation von einer ortsfesten Basis-station gebildet werden. Eine feste Zuordnung existiert hier jedoch nicht. Als Voraussetzung wird jedoch formuliert, dass auf der einen Kanalseite mehr Antennen vorgesehen sind als auf der anderen. Die Abwärtssenderichtung wird dann dadurch festgelegt, dass sie von der Kanalseite mit der Antennenüberzahl zur Kanalseite mit der Antennenminderzahl zeigt. Entgegengesetztes gilt für die Aufwärtssenderichtung. Bei der Antennenüberzahl an der Abwärtssendestation ist die Abwärtssenderichtung immer die qualitativ bessere Senderichtung im Übertragungssystem bei einer rein linearen Signalverarbeitung am Sender oder am Empfänger. Welche Station also als mobile oder ortsfeste und vornehmlich sendende oder empfangende Station ausgebildet werden soll, hängt ausschließlich von der Zuordnung der Antennenanzahl ab. Je nach Anwendungsfall ist. diese Verteilung so vorzunehmen, dass die qualitativ hochwertige Abwärtssenderichtung mit der Richtung der hochratigen Datenübertragung übereinstimmt. Beispielsweise kann im umgekehrten Fall eine Videokamera als Möbilgerät mit mehr Antennen ausgerüstet sein. Diese sendet dann komplexe Datensignalströme zu einer weniger Antennen aufweisenden Basisstation in Abwärtssenderichtung. Die Basisstation dient dabei dann nur der einfachen Rückkopplung, beispielsweise zur Ortssteuerung der Videokamera.

**MIMO-System I :**   Man verwendet Schema B für die Aufwärtssenderichtung und Schema C für die Abwärtssenderichtung eines Mobilkommunikationssystems. Dieses Konzept ermöglicht bidirektionale MIMO-Übertragung mit exzellenten Übertragungseigenschaften und hoher Geschwindigkeit in beiden Richtungen und es ist prinzipiell sowohl für den Inter- und Intranetzugang über eine Basisstation als auch für den adhoc-Betrieb zwischen zwei Mobilgeräten geeignet.

**MIMO-System II:** Man kombiniert Schema A für die Aufwärtssenderichtung mit Schema C für die Abwärtssenderichtung. Das ermöglicht einen einfachen und kostengünstigen Aufbau der Mobilgeräte, die die Pilotsequenzen für die Kanalschätzung senden und sonst aus mehreren einfachen Sendem und Empfängem ohne Signalverarbeitung bestehen. Die gesamte zur Übertragung benötigte Signalverarbeitung findet in der Basisstation statt. In der Aufwärtsrichtung wird die Bitfehlerrate in der Regel größer sein, was durch die Kanalkodierung ausgeglichen werden muss. Dadurch reduziert sich die effektiv in der Aufwärtsrichtung nutzbare Datensignalrate. Diese Konzept eignet sich besonders für asymmetrischen Datenverkehr z.B. beim Intemetrugang. Eine ad-hoc-Übertragung zwischen zwei Mobilstationen ist allerdings aufgrund der dort fehlenden Signalverarbeitung nicht möglich.

**MIMO-System III:** In Konzept II können mehrere Mobilgeräte die Gesamtzahl der Antennen unter sich aufteilen, sodass ein Mobilgerät eine oder mehrere Antennen verwendet. Insgesamt muss nur die Gesamtzahl der Antennen in allen Mobilstationen kleiner sein als die Zahl der Antennen in der Basisstation. Alle Mobilstationen senden bzw. empfangen jeweils auf derselben Frequenz. Dieses Konzept ermöglicht es dem MIMO-System, seine Ressourcen flexibel auf mehrere Endgeräte aufzuteilen, die verschiedene Anwendungen unterstützen und jeweils nur mit der dafür notwendigen Hardware ausgestattet sind.

**Verzeichnis der angeführten Zitate**

[1] G. J. Foschini "Layered space-time architecture for wireless communication in a fading environment when using multiple antennas", Bell Labs Technical Joumal 1996 (2), pp 41-59

[2] G. D. Golden, C. J. Foschini, R. A Valenzuela and P. W. Wolniansky "Detection algorithm and initial laboratory results using V-BLAST space-time communication architecture", Electronics Letters 1999, Vol. 35, No. 1, pp. 14-16

[3] A. van Zelst, R. van Nee, G. A. Awater "Turbo-BLAST and its Performance", Proceedings 53rd IEEE Vehicular Technology Conference VTC (Spring) May 6-9 2001, Rhodos, Greece

[4] C. Z W. H. Sweatman, J. S. Thompson, B. Mulgrew and P.M. Grant "A comparison of detection algorithms including BLAST for wireless communication using multiple antennas" Proceedings IEEE Symposium on Personal, Indoor and Mobile Radio Communication Sept 18-21 2000, London, p.698-703 E. Telatar "Capacity of Multi-Antenna Gaussian Channels", Europ. Trans. Telecomm. Vol. 10, No. 6, (1999), pp. 585-595

[6] K.K. Wong, R.D. Murch, K. B. Letaief "MIMO antenna system for frequency-selective fading channels", in. IEEE Int. Symp. on Personal, Indoor and Mobile Radio Communications, PIMRC 2000, Vol. 2, pp.1500-1504

[7] V. Jungnickel, V. Pohl, U. Krüger, C. von Helmolt, T. Haustein and S. Stanczak "A Radio System With Multi-Element Antennas", Proceedings 53rd IEEE Vehicular Technology Conference VTC (Spring) May 6-9 2001, Rhodos, Greece

[8] L J. Greenstein, N. R. Sollenberger "Method and apparatus for enhancing communication reception at a wireless communication terminal", U.S. Patent No. 6,131,016, filed Aug. 27,1997

An dieser Stelle soll noch auf Veröffentlichungen der Erfinder nach dem Prioritätstag der vorliegenden Anmeldung hingewiesen werden, die sich unter anderem auch auf die beanspruchten Erfindungsgegenstände beziehen:

[9] V. Jungnickel, T. Haustein, E. Jorswieck, C. v. Helmolt "A MIMO WLAN Based on Linear Channel Inversion", IEE Seminar on MIMO Systems, Dec. 12, 2001, London, UK

[10] E. Jorswieck, G. Wunder, V. Jungnickel, T. Haustein "Inverse Eigen-value Statistics for Rayleigh and Rician MIMO Channels", IEE Seminar on MIMO Systems, Dec. 12, 2001, London, UK

[11] T. Haustein, C. von Helmolt, E. Jorswieck, V. Jungnickel, V. Pohl "Performance of MIMO Systems with channel inversion", IEEE VTC Spring 2002, Birmingham, AL, May 6-9, 2002

**Patentansprüche**

**1.** Adaptives Signalverarbeitungsverfahren für eine bidirektionale Funkübertragung von digitalen Datenströmen in Auf- und Abwärtssenderichtung über einen MIMO-Kanal mit n Antennen auf der einen und m Antennen auf der anderen Kanalseite und mit einer sendeseitigen Signalvorverarbeitung der Sendesignale x und einer empfangsseitigen Signalnachbearbeitung der Empfangssignale y, die beide auf einer Schätzung der komplexwertigen Kanalmatrix basieren,

**wobei**

- die sendeseitige Signalvorverarbeitung aus einer Multiplikation der zu sendenden Datensignale mit einer Sendematrix und die empfangsseitige Signalnachverarbeitung aus einer Multiplikation der Empfangssignale mit einer Empfangsmatrix besteht, wobei die Signalnachverarbeitung ausschließlich in der Aufwärtssenderichtung erfolgt und Sende- und Empfangsmatrix aus einer linearen Zedegung der geschätzten Kanalmatrix H gewonnen werden,
- in Aufwärtssenderichtung, $n \to m$, auf der Empfangsseite mindestens eine Antenne mehr verwendet wird als auf der Sendeseite und in Abwärtssenderichtung, $m \to n$, auf der Sendeseite mindestens eine Antenne mehr verwendet wird als auf der Empfangsseite, $n<m$, und dass
- die Schätzung für die Kanalmatrix H bei einer in Abhängigkeit von den Kanaleigenschaften gewählten Symbolrate von mindestens 100 kSymbole/s ermittelt wird, wobei unter Ausnutzen der Reziprozität des MIMQ-Kanals bei gleicher Übertragungsfrequenz in Auf- und Abwärtssenderichtung und in Abwesenheit von Gleichkanalstörungen die Kanalmatrix in Abwärtssendenchtung durch Transponieren der Kanalmatrix aus der Schätzung in Aufwärtssendenchtung gewonnen wird und umgekehrt.

2. Adaptives Signalverarbeitungsverfahren nach Anspruch 1,
**dadurch gekennzeichnet, dass**
in der Aufwärtssenderichtung die Sendematrix für die Multiplikation mit den Sendesignalen x auf der Basis der Singulärwertzerlegung der Kanalmatrix H mit n<m bestimmt wird, welche gegeben ist durch

$$(I) \qquad H = U \cdot D \cdot V^H$$

mit U, V = (mxn)-, (nxn)-spaltenorthonormale Matrizen (Exponent H : hermitesche Matrix), D = (nxn)-Diagonalmatrix mit den Singulärwerten der Kanalmatrix H, sodass modifizierte Sendesignale x* bestimmt werden durch eine lineare Matrix-Vektormultiplikation gemäß

$$(II) \qquad x^* = V \cdot D^{-1} \cdot V^H \cdot x \qquad oder \qquad x^* = V \cdot D^{-1} \cdot x$$

und dass die empfangsseitige Nachbearbeitung der Empfangssignale y in der Aufwärtssenderichtung durch eine lineare Matrix-Vektormultiplikation gemäß

$$(III) \qquad x' = V \cdot U^H \cdot y \qquad oder \qquad x' = U^H \cdot y$$

zur Bestimmung rekonstuierter Sendesignale x' erfolgt und dass
in der Abwärtssenderichtung die modifizierten Sendesignale x* aus der Multiplikation der Sendesignale x mit einer generalisierten Inversen der transponierten Kanalmatrix $H^T$ unter Ausnutzung der Reziprozität des Übertragungskanals bestimmt werden durch eine lineare Matrix-Vektormultiplikation gemäß

$$(IV) \qquad x^* = (H^{-1})^T \cdot x.$$

3. Adaptives Signalverarbeitungsverfahren nach Anspruch 2,
**dadurch gekennzeichnet, dass**
die generalisierte inverse die Moore-Penrose-Pseudoinverse ist.

4. Adaptives Signalverarbeitungsverfahren nach einem der Ansprüche 1 bis 3,
**dadurch gekennzeichnet, dass**
zur möglichst genauen Schätzung der Kanalmatrix spezielle, leicht generierund erkennbare Pilotsignale intermittierend oder überlagert gleichzeitig zu den Sendesignalen ausgesendet werden, die jede Antenne eindeutig charakterisieren.

**5.** Adaptives Signalverarbeitungsverfahren nach Anspruch 4,
**dadurch gekennzeichnet, dass**
die Pilotsignale aus orthogonalen Sequenzen, insbesondere nach Gold oder Hadamard, mit einer Länge von mehr als 100 Symbolen generiert werden.

**6.** Adaptives Signalverarbeitungsverfahren nach einem der Ansprüche 1 bis 5,
**dadurch gekennzeichnet, dass**
die Funkübertragung im Zeitduplex-Verfahren erfolgt.

**7.** Adaptives Signalverarbeitungsverfahren nach einem der Ansprüche 1 bis 5,
**dadurch gekennzeichnet, dass**
die Übertragung im Frequenzduplex-Verfahren erfolgt, wobei die Pilotsignale stets auf derselben Trägerfrequenz ausgestrahlt und detektiert werden, bei der auch die Sendesignale gesendet werden.

**8.** Adaptives Signalverarbeitungsverfahren nach einem der Ansprüche 1 bis 7,
**dadurch gekennzeichnet, dass**
die Leistungen von auftretenden Gleichkanalstörungen in jedem im MIMO-Kanal auftretenden Datensignalpfad nach der Rekonstruktion der Sendesignale auf der Empfangsseite gemessen und über einen Rückkanal regelmäßig an die Sendeseite zurück übertragen werden.

**9.** Adaptives Signalverarbeitungsverfahren nach Anspruch 8,
**dadurch gekennzeichnet, dass**
die Leistung in jedem im MIMO-Kanal auftretenden Datensignalpfad vor der sendeseitigen Signalvorverarbeitung an die auf der Empfangsseite jeweils nach der Signalnachbearbeitung gemessene Gleichkanalstörung so angepasst wird, dass das Signal-zu-Stör-plus-Rausch-Leistungsverhältnis in allen Datensignalpfaden gleich groß ist.


**Claims**

**1.** Adaptive signal processing method for a bi-directional radio transmission of digital data streams in uplink and downlink transmission directions over a MIMO channel having n antennae on one side of the channel and m antennae on the other side of the channel and having transmission-side signal pre-processing of the transmission signals x and receive-side signal post-processing of the receive signals y, both of which are based on an estimation of the complex-valued channel matrix,
wherein

- the transmission-side signal pre-processing consists of a multiplication of the data signals to be transmitted by a transmission matrix and the receive-side post-processing consists of a multiplication of the receive signals by a receive matrix, with the signal post-processing taking place exclusively in the uplink transmission direction and the transmission and receive matrix being derived from a linear decomposition of the estimated channel matrix H,
- in the uplink transmission direction (n->m) at least one antenna more is used on the receive side than on the transmission side and in the downlink transmission direction (m->n) at least one antenna more is used on the transmission side than on the receive side (n<m), and
- the estimation for the channel matrix H is determined at a symbol rate of at least 100 ksymbols/s selected as a function of the channel properties, whereby through making use of the reciprocity of the MIMO channel at the same transmission frequency in the uplink and downlink transmission directions and in the absence of common channel interferences the channel matrix in the downlink transmission direction is derived by transposition of the channel matrix from the estimation in the uplink transmission direction, and vice versa.

**2.** Adaptive signal processing method according to claim 1,
**characterised in that**
in the uplink transmission direction the transmission matrix for the multiplication by the transmission signals x is defined on the basis of the singular value decomposition of the channel matrix H with n<m, which is given by

$$\text{(I)} \qquad H = U \cdot D \cdot V^{H}$$

where U, V = (mxn), (nxn) column-orthogonal matrices (exponent H: Hermitian matrix), D = (nxm) diagonal matrix with the singular values of the channel matrix H, so that modified transmission signals x* are determined by means of a linear matrix-vector multiplication according to

$$\text{(II)} \qquad x^* = V \cdot D^{-1} \cdot V^H \cdot x \qquad \text{or} \qquad x^* = V \cdot D^{-1} \cdot x$$

and that the receive side post-processing of the receive signals y is carried out in the downlink transmission direction by means of a linear matrix-vector multiplication according to

$$\text{(III)} \qquad x' = V \cdot U^H \cdot y \qquad \text{or} \qquad x' = U^H \cdot y$$

for determining reconstructed transmission signals and that in the downlink transmission direction the modified transmission signals x* are determined from the multiplication of the transmission signals x by a generalised inverse of the transposed channel matrix $H^T$ using the reciprocity of the transmission channel by means of a linear matrix-vector multiplication according to

$$\text{(IV)} \qquad x^* = (H^{-1})^T \cdot x .$$

3. Adaptive signal processing method according to claim 2,
   **characterised in that**
   the generalised inverse is the Moor-Penrose pseudo-inverse.

4. Adaptive signal processing method according to one of the claims 1 to 3,
   **characterised in that**
   for as precise an estimation of the channel matrix as possible, special, easily generated and recognisable pilot signals are transmitted intermittently or in overlaid form simultaneously to the transmission signals which uniquely characterise each antenna.

5. Adaptive signal processing method according to claim 4,
   **characterised in that**
   the pilot signals are generated from orthogonal sequences, in particular according to Gold or Hadamard, with a length of more than 100 symbols.

6. Adaptive signal processing method according to one of the claims 1 to 5,
   **characterised in that**
   the radio transmission is performed using the time-division duplex method.

7. Adaptive signal processing method according to one of the claims 1 to 5,
   **characterised in that**
   the transmission is performed using the frequency-division duplex method, with the pilot signals always being transmitted and detected on the same carrier frequency at which the transmission signals are also transmitted.

8. Adaptive signal processing method according to one of the claims 1 to 7,
   **characterised in that**
   the powers of occurring common channel interferences are measured in each data signal path occurring in the MIMO channel after the reconstruction of the transmission signals on the receive side and are regularly transmitted back to the transmission side via a return channel.

9. Adaptive signal processing method according to claim 8,
   **characterised in that**
   before the signal pre-processing on the transmission side, the power in each data signal path occurring in the MIMO channel is adjusted to the common channel interference measured on the receive side in each case after signal post-processing such that the signal-to-interference-plus-noise power ratio is of equal magnitude in all the data signal paths.

**Revendications**

1. Procédé adaptatif de traitement de signaux pour une transmission radio bidirectionnelle de flux de données numériques dans le sens d'émission ascendant et le sens d'émission descendant au moyen d'un canal MIMO avec n antennes sur un côté de canal et m antennes sur l'autre côté de canal et avec un pré-traitement de signaux côté émission des signaux d'émission x et un post-traitement de signaux côté réception des signaux de réception y, qui sont basés tous deux sur une estimation de la matrice de canal à valeur complexe, dans lequel

- le pré-traitement de signaux côté émission comprend une multiplication des signaux de données à émettre avec une matrice d'émission et le post-traitement de signaux côté réception une multiplication des signaux de réception avec une matrice de réception, le post-traitement de signaux s'effectuant exclusivement dans le sens d'émission ascendant et les matrices d'émission et de réception étant obtenues à partir d'une décomposition linéaire de la matrice de canal H estimée,
- dans le sens d'émission ascendant, (n→m) sur le côté émission, on utilise au moins une antenne de plus que du côté émission et dans le sens d'émission descendant, (m→n), du côté émission, on utilise au moins une antenne de plus que sur le côté réception (n < m), et
- l'estimation pour la matrice de canal H est déterminée dans le cas d'un débit de symboles, choisi en fonction des propriétés du canal, d'au moins 100 ksymboles/s, la matrice du canal étant obtenue dans le sens d'émission descendant par transposition de la matrice de canal à partir de l'estimation dans le sens d'émission ascendant et inversement, avec l'utilisation de la réciprocité du canal MIMO à la même fréquence de transmission dans le sens d'émission ascendant et le sens d'émission descendant et en l'absence de perturbations sur le même canal.

2. Procédé adaptatif de traitement de signaux selon la revendication 1,
   **caractérisé en ce que**
   dans le sens d'émission ascendant, la matrice d'émission pour la multiplication avec les signaux d'émission x est déterminée sur la base de la décomposition des valeurs singulières de la matrice de canal H avec n < m, qui est donnée par

$$(I) \qquad H = U \cdot D \cdot V^{H}$$

avec U, V = (mxn)-, (nxn)-matrices orthonormales en colonnes (exposant H : matrice hermitienne), D = (n x n)-matrice diagonale avec les valeurs singulières de la matrice de canal H, de sorte que des signaux d'émission x* modifiés sont déterminés par une multiplication de vecteur-matrice linéaire selon

$$(II) \qquad x^* = V \cdot D^{-1} \cdot V^{H} \cdot x \qquad ou \qquad x^{*\prime} = V \cdot D^{-1} \cdot x$$

et **en ce que** le post-traitement côté réception des signaux de réception y dans le sens d'émission ascendant s'effectue par une multiplication de vecteur-matrice linéaire selon

$$(III) \qquad x' = V \cdot U^{H} \cdot y \qquad ou \qquad x' = U^{H} \cdot y$$

pour la détermination de signaux d'émission x' reconstitués et **en ce que** dans le sens d'émission descendant, les signaux d'émission x* modifiés sont déterminés à partir de la multiplication des signaux d'émission x avec un inverse généralisé de la matrice de canal $H^T$ transposée avec l'utilisation de la réciprocité du canal de transmission par une multiplication de vecteur-matrice linéaire selon

$$(IV) \qquad x^* = (H^{-1})^{T} \cdot x.$$

3. Procédé adaptatif de traitement de signaux selon la revendication 2,
   **caractérisé en ce que**
   l'inverse généralisé est le pseudo-inverse de Moore-Penrose.

4. Procédé adaptatif de traitement de signaux selon l'une quelconque des revendications 1 à 3,

**caractérisé en ce que**
pour l'estimation la plus précise possible de la matrice de canal, des signaux pilotes spéciaux, pouvant être générés et reconnus facilement sont envoyés par intermittence ou par superposition en même temps que les signaux d'émission, qui caractérisent clairement chaque antenne.

5. Procédé adaptatif de traitement de signaux selon la revendication 4,
   **caractérisé en ce que**
   les signaux pilotes sont générés à partir de séquences orthogonales, en particulier selon Gold ou Hadamard, avec une longueur de plus de 100 symboles.

6. Procédé adaptatif de traitement de signaux selon l'une quelconque des revendications 1 à 5,
   **caractérisé en ce que**
   la transmission radio s'effectue dans le procédé de duplex temporel.

7. Procédé adaptatif de traitement de signaux selon l'une quelconque des revendications 1 à 5,
   **caractérisé en ce que**
   la transmission s'effectue dans le procédé de duplex de fréquence, les signaux pilotes étant diffusés et détectés toujours sur la même fréquence porteuse, sur laquelle les signaux d'émission sont également émis.

8. Procédé adaptatif de traitement de signaux selon l'une quelconque des revendications 1 à 7,
   **caractérisé en ce que**
   les puissances des perturbations qui apparaissent sur le même canal sont mesurées dans chaque chemin de signal de données apparaissant dans le canal MIMO après la reconstitution des signaux d'émission sur le côté réception et sont retransmis via un canal retour régulièrement au côté d'émission.

9. Procédé adaptatif de traitement de signaux selon la revendication 8,
   **caractérisé en ce que**
   la puissance dans chaque chemin de signal de données apparaissant dans le canal MIMO est adaptée avant le pré-traitement de signaux côté émission à la perturbation sur le même canal, mesurée sur le côté réception à chaque fois après le post-traitement de signaux de telle sorte que le rapport de puissance signal-parasite-plus-bruit est identique dans tous les chemins du signal de données.

Fig.1

Fig.2

EP 1 402 657 B1

Fig.3

20

Fig.4

for MS Tx

for BS Tx only

for BS Rx

uplink data

downlink data

mobile unit transmitting

base station transmitting

time

Fig.5

EP 1 402 657 B1

frequency A
(up-link)

for BS Rx

for MS Tx

uplink data

frequency B
(down-link)

for BS Tx

downlink data

time

mobile unit
transmitting

base station
transmitting

Fig.6

EP 1 402 657 B1

**Fig.7**

(i)  n = m = 10, Rx signal processing only

(ii) n = 8, m = 12, Rx signal processing only

(iii) n = 8, m = 12, V-BLAST

(iv) n = 8, m =12, Tx signal processing only (down-link channel inversion)

(v)  n = m = 1, AWGN channel

(vi) n = 8, m = 12, Tx and Rx signal processing (uplink channel inversion)

Fig.8

A: Rx signal processing only

B: Tx and Rx signal processing (uplink channel inversion)

C: Tx signal processing only (downlink channel inversion)

Fig.9